# EUROPEAN PATENT APPLICATION

(11) **EP 4 362 576 A1**
(43) Date of publication of application: **01.05.2024**
(21) Application number: 22841257.3
(22) Date of filing: 07.07.2022
(51) Int. Cl.: H04W 68/02

(54) **COMMUNICATION METHOD AND APPARATUS**

(30) Priority: 13.07.2021 CN 202110790658; 28.07.2021 CN 202110859402
(71) Applicant: Huawei Technologies Co., Ltd., Longgang Shenzhen, Guangdong 518129 (CN)
(72) Inventor: XUE, Yifan, Shenzhen, Guangdong 518129 (CN); XUE, Lixia, Shenzhen, Guangdong 518129 (CN)
(74) Representative: Maiwald GmbH
(86) International application number: PCT/CN2022/104375
(87) International publication number: WO 2023/284620

(57) **Abstract**

This application provides a communication method and apparatus. The method includes: A terminal device receives a first signal from a network device; the terminal device receives a second signal based on the first signal; and if the terminal device does not receive the first signal in a first time period, the terminal device receives a third signal. Both the second signal and the third signal indicate paging-related information. If the terminal device does not receive the first signal in the first time period, the terminal device determines to receive the paging-related information by using a procedure of receiving the third signal. When the terminal device is located at an edge of a coverage area of the second signal, the terminal device may not be able to receive the first signal and the second signal. In this application, if the terminal device does not receive the first signal in the first time period, the terminal device determines to receive the third signal, so that a paging receiving process can be performed, to avoid paging missing caused by a failure to receive the second signal.

## Description

This application claims priorities to Chinese Patent Application No. 202110790658.7, filed with the China National Intellectual Property Administration on July 13, 2021 and entitled "WAKE-UP SIGNAL SENDING METHOD", and to Chinese Patent Application No. 202110859402.7, filed with the China National Intellectual Property Administration on July 28, 2021 and entitled "COMMUNICATION METHOD AND APPARATUS", both of which are incorporated herein by reference in their entireties.

### TECHNICAL FIELD

This application relates to the field of wireless communication, and in particular, to a communication method and apparatus.

### BACKGROUND

A terminal device may receive a wake-up signal through a separate low-power small circuit, for example, a wake-up receiver (wake-up receiver, WUR), and a primary receiver may be in a deep sleep state. After the terminal device detects the wake-up signal through the WUR, the terminal device triggers wake-up of the primary receiver. After the primary receiver is woken up, the terminal device may perform a paging (paging) receiving process through the primary receiver, for example, receive a paging message.

However, a coverage area of the wake-up signal is smaller than a coverage area of a downlink signal of a normal cellular network. When the terminal device is located at an edge of the coverage area of the wake-up signal, the terminal device may not be able to correctly receive the wake-up signal through the WUR, and therefore cannot receive the paging message through the primary receiver. Consequently, the terminal device is in a state in which the terminal device cannot be paged.

### SUMMARY

This application provides a communication method and apparatus, so that a terminal device can determine a manner or procedure of receiving paging-related information, to avoid a case in which the terminal device cannot be paged because the terminal device cannot correctly receive a wake-up signal through a WUR.

According to a first aspect, a communication method is provided. The method may be performed by a terminal device, or may be performed by a chip, a chip system, or a circuit configured in a terminal device. This is not limited in this application.

The method may include: The terminal device receives a first signal from a network device; the terminal device receives a second signal based on the first signal, where the second signal indicates paging-related first information; and if the terminal device does not receive the first signal in a first time period, the terminal device receives a third signal, where the third signal indicates paging-related second information.

According to the foregoing technical solution, the terminal device may determine, by using the first signal, a manner (or a procedure) of receiving paging. Specifically, both the second signal and the third signal indicate paging-related information. If the terminal device does not receive the first signal in the first time period, the terminal device determines to receive the paging-related information by using a procedure of receiving the third signal (for example, perform a paging receiving procedure based on the received third signal). In this manner, it can be resolved that when the terminal device is located at an edge of a coverage area of the second signal (for example, a wake-up signal), the terminal device may not be able to correctly receive the second signal through a wake-up circuit, and therefore cannot perform the paging receiving process through a primary circuit. For example, when the terminal device is located at the edge of the coverage area of the second signal, the terminal device may not be able to receive the first signal and the second signal through the wake-up circuit. According to the foregoing technical solution, when the terminal device does not receive the first signal in the first time period, the terminal device determines to receive the third signal (for example, receive a paging message), so that the paging receiving process can be performed, to avoid paging missing caused by a failure to receive the second signal.

With reference to the first aspect, in some implementations of the first aspect, the method further includes: If the terminal device receives the second signal in the first time period, the terminal device receives the third signal, or the terminal device performs random access.

According to the foregoing technical solution, if the terminal device receives the second signal, the terminal device may receive the third signal or perform random access. For example, if the second signal carries a part of paging information, after receiving the second signal, the terminal device may determine to receive the third signal (or start to perform the paging receiving procedure). For another example, if the second signal carries complete paging information, the terminal device may initiate random access after receiving the second signal.

With reference to the first aspect, in some implementations of the first aspect, the method further includes: If the terminal device receives the first signal but does not receive the second signal in the first time period, the terminal device receives the second signal.

According to the foregoing technical solution, if the terminal device receives the first signal in the first time period, the terminal device determines to receive the paging-related information by using a procedure of receiving the second signal. For example, it is determined, based on the received second signal, whether the terminal device may be paged, and if the terminal device may be paged, the third signal is received, to perform the paging receiving procedure. For another example, it is determined, based on the received second signal, whether the terminal device is paged, and if the terminal device is paged, random access is initiated.

With reference to the first aspect, in some implementations of the first aspect, the first signal is a tracking area specific signal; or the first signal is a signal specific to one or more cells; or the first signal is a signal specific to one or more network devices; or the first signal is a signal specific to one or more terminal devices; or the first signal is a signal specific to one or more time periods.

With reference to the first aspect, in some implementations of the first aspect, the one or more time periods include a second time period, the second time period is within the first time period, and that the terminal device receives the second signal includes: The terminal device receives the second signal in the second time period.

According to the foregoing technical solution, the terminal device may receive the second signal in a specific time period (for example, the second time period), to reduce a probability that the terminal device is mistakenly woken up (to be specific, the terminal device is not paged, but another terminal device corresponding to the second signal is paged).

With reference to the first aspect, in some implementations of the first aspect, the one or more terminal devices include the terminal device, and after the terminal device receives the first signal from the network device, the method further includes: The terminal device receives a fourth signal from the network device, where the fourth signal indicates a terminal device other than the one or more terminal devices to receive the second signal or the third signal, and the second time period is a time period between a moment at which the terminal device receives the first signal and a moment at which the terminal device receives the fourth signal.

With reference to the first aspect, in some implementations of the first aspect, the one or more terminal devices include the terminal device, and the method further includes: If the terminal device receives the first signal in the first time period, the terminal device receives a fourth signal, where the fourth signal indicates a terminal device other than the one or more terminal devices to receive the second signal or the third signal; or if the terminal device receives a fourth signal in the first time period, the terminal device receives the first signal, and/or the terminal device no longer receives the second signal in a third time period; or if the terminal device does not receive a fourth signal in the first time period, the terminal device receives the third signal, where the third time period is a time period after a moment at which the terminal device receives the fourth signal and before a moment at which the terminal device receives the first signal.

With reference to the first aspect, in some implementations of the first aspect, the method further includes: If the terminal device does not receive the first signal in the first time period, the terminal device performs radio resource management RRM measurement, or the terminal device performs cell reselection.

According to the foregoing technical solution, the first signal may further provide a serving cell measurement function. For example, the terminal device may measure signal quality of a serving cell based on the first signal. If the signal quality of the serving cell is less than a specific threshold (which may be specifically represented as that the terminal device does not receive the first signal in a specific time length), the terminal device performs RRM measurement or cell reselection.

With reference to the first aspect, in some implementations of the first aspect, the method further includes: If signal quality of a serving cell of the terminal device in a fourth time period is greater than or equal to a second threshold, or if a signal quality variation of the serving cell in the fourth time period is less than or equal to a third threshold, the terminal device receives the second signal.

According to the foregoing technical solution, when a distance between the terminal device and the network device is short (for example, the signal quality of the serving cell of the terminal device in the fourth time period is greater than or equal to the second threshold), or when a moving speed of the terminal device is low (for example, the signal quality variation of the serving cell in the fourth time period is less than or equal to the third threshold), the terminal device may continue to receive the second signal. In other words, the terminal device determines to receive the paging-related information in the procedure of receiving the second signal.

According to a second aspect, a communication method is provided. The method may be performed by a terminal device, or may be performed by a chip, a chip system, or a circuit configured in a terminal device. This is not limited in this application.

The method may include: The terminal device receives a first signal from a network device through a first module; the terminal device receives a second signal based on the first signal through the first module, where the second signal indicates paging-related first information; and the terminal device wakes up a second module if the terminal device does not receive the first signal through the first module or receives the second signal through the first module in a first time period. The terminal device includes the first module and the second module.

For example, the first module is a wake-up circuit or a module of a wake-up circuit, and the second module is a module of a primary circuit or a primary circuit.

According to the foregoing technical solution, when keeping the second module (for example, the primary circuit) in a sleep state, the terminal device may determine, by using the first signal through the first module (for example, the wake-up circuit), a manner (or a procedure) of receiving paging-related information. Specifically, if the terminal device does not receive the first signal through the first module in the first time period, the terminal device determines to wake up the second module, to receive the paging-related information through the second module (for example, receive a third signal through the second module, and perform a paging receiving procedure based on the received third signal). If the terminal device receives the first signal in the first time period, the terminal device determines to receive the paging-related information through the first module (for example, when the second signal carries a part of paging information, receive the second signal through the first module; determine, based on the received second signal, whether the terminal device may be paged; and if the terminal device may be paged, receive the third signal through the second module, to perform the paging receiving procedure; or for another example, when the second signal carries complete paging information, receive the second signal through the first module; determine, based on the received second signal, whether the terminal device is paged; and if the terminal device is paged, initiate random access through the second module). In this manner, it can be resolved that when the terminal device is located at an edge of a coverage area of the second signal (for example, a wake-up signal), the terminal device may not be able to correctly receive the second signal through the first module, and therefore cannot perform the paging receiving process through the second module. For example, when the terminal device is located at the edge of the coverage area of the second signal, the terminal device may not be able to correctly receive the first signal and the second signal through the wake-up circuit. According to the foregoing technical solution, when the terminal device does not receive the first signal in the first time period, the terminal device wakes up the primary circuit, to perform the paging receiving process through the primary circuit, so as to avoid paging missing caused by a failure to receive the second signal.

With reference to the second aspect, in some implementations of the second aspect, after the second module is woken up, the method further includes: The terminal device receives the third signal through the second module, or the terminal device performs random access through the second module, where the third signal indicates page-relating second information.

With reference to the second aspect, in some implementations of the second aspect, the method further includes: if the terminal device receives the first signal through the first module and does not receive the second signal in the first time period, the terminal device receives the second signal through the first module.

According to the foregoing technical solution, if the terminal device receives the first signal in the first time period, the terminal device determines to receive the paging-related information in the manner of receiving the second signal through the first module.

With reference to the second aspect, in some implementations of the second aspect, the first signal is a tracking area specific signal; or the first signal is a signal specific to one or more cells; or the first signal is a signal specific to one or more network devices; or the first signal is a signal specific to one or more terminal devices; or the first signal is a signal specific to one or more time periods.

With reference to the second aspect, in some implementations of the second aspect, the one or more time periods include a second time period, the second time period is within the first time period, and that the terminal device receives the second signal through the first module includes: The terminal device receives the second signal in the second time period through the first module.

According to the foregoing technical solution, the terminal device may receive the second signal through the first module in a specific time period (for example, the second time period), to reduce a probability that the terminal device is mistakenly woken up (to be specific, the terminal device is not paged, but another terminal device corresponding to the second signal is paged).

With reference to the second aspect, in some implementations of the second aspect, the one or more terminal devices include the terminal device, and after the terminal device receives the first signal from the network device through the first module, the method further includes: The terminal device receives a fourth signal from the network device through the first module, where the fourth signal indicates a terminal device other than the one or more terminal devices to receive the second signal or the third signal, and the second time period is a time period between a moment at which the terminal device receives the first signal through the first module and a moment at which the terminal device receives the fourth signal through the first module.

With reference to the second aspect, in some implementations of the second aspect, the one or more terminal devices include the terminal device, and the method further includes: If the terminal device receives the first signal through the first module in the first time period, the terminal device receives a fourth signal through the first module, where the fourth signal indicates a terminal device other than the one or more terminal devices to receive the second signal or the third signal; or if the terminal device receives a fourth signal through the first module in the first time period, the terminal device receives the first signal through the first module, and/or the terminal device no longer receives the second signal through the first module in a third time period; or if the terminal device does not receive a fourth signal through the first module in the first time period, the terminal device receives the third signal through the second module, where the third time period is a time period after a moment at which the terminal device receives the fourth signal through the first module and before a moment at which the terminal device receives the first signal through the first module.

With reference to the second aspect, in some implementations of the second aspect, after the terminal device wakes up the second module if the terminal device does not receive the first signal through the first module, the method further includes: The terminal device performs radio resource management RRM measurement through the second module, or the terminal device performs cell reselection through the second module.

According to the foregoing technical solution, the first signal may further provide a serving cell measurement function. For example, the terminal device may measure signal quality of a serving cell based on the first signal. If the signal quality of the serving cell is less than a specific threshold (which may be specifically represented as that the terminal device does not receive the first signal in a specific time length), the second module is woken up, to perform RRM measurement or cell reselection.

With reference to the second aspect, in some implementations of the second aspect, after the second module is woken up, the method further includes: If signal quality of a serving cell of the terminal device in a fourth time period is greater than or equal to a second threshold, or if a signal quality variation of the serving cell in the fourth time period is less than or equal to a third threshold, the terminal device receives the second signal through the first module.

According to the foregoing technical solution, when a distance between the terminal device and the network device is short (for example, the signal quality of the serving cell of the terminal device in the fourth time period is greater than or equal to the second threshold), or when a moving speed of the terminal device is low (for example, the signal quality variation of the serving cell in the fourth time period is less than or equal to the third threshold), the terminal device may wake up the first module to continue to receive the second signal. In other words, the terminal device determines to receive the paging-related information in the procedure of receiving the second signal.

With reference to the first aspect or the second aspect, in some implementations, a waveform of the first signal is the same as a waveform of the second signal, and/or a modulation scheme of the first signal is the same as a modulation scheme of the second signal.

With reference to the first aspect or the second aspect, in some implementations, the modulation scheme of the first signal and/or the modulation scheme of the second signal are/is on-off keying OOK; and/or the waveform of the first signal and/or the waveform of the second signal are/is the OOK.

With reference to the first aspect or the second aspect, in some implementations, the first signal is a signal transmitted at a first frequency location, and the second signal is a signal transmitted at a second frequency location. The first frequency location is the same as the second frequency location, or the first frequency location is different from the second frequency location.

For example, when the first frequency location is different from the second frequency location, the terminal device may perform energy detection at the first frequency location. If energy detected by the terminal device at the first frequency location is less than or equal to a first threshold, the terminal device receives the third signal, or the terminal device wakes up the second module.

According to the foregoing technical solution, if the first frequency location is the same as the second frequency location, a signal comparison module in the first module may be improved, so that the signal comparison module can differentiate between the first signal and the second signal. In this way, performance of the first module can be improved at low costs. If the first frequency location is different from the second frequency location, whether the first signal is received may be determined in an energy detection manner. Therefore, a requirement on the first signal is not high, and a design is more flexible.

According to a third aspect, a communication method is provided. The method may be performed by a terminal device, or may be performed by a chip, a chip system, or a circuit configured in a terminal device. This is not limited in this application.

The method may include: The terminal device receives a third signal through a second module, where the third signal indicates paging-related second information; and if a serving cell of the terminal device meets a preset condition, the terminal device wakes up a first module. The terminal device includes the first module and the second module.

According to the foregoing technical solution, when the preset condition is met, the terminal device may wake up the first module to receive a second signal, to reduce signaling overheads caused by notifying and waking up the first module.

With reference to the third aspect, in some implementations of the third aspect, after the terminal device wakes up the first module, the method further includes: The terminal device receives the second signal through the first module, where the second signal indicates paging-related first information.

With reference to the third aspect, in some implementations of the third aspect, the method further includes: After a fifth time period, the terminal device determines, through the second module, whether the serving cell of the terminal device meets the preset condition.

According to the foregoing technical solution, after the second module works stably for a period of time, it may be determined whether the preset condition is met, and the terminal device may wake up the first module to receive the second signal. In other words, the terminal device determines to receive paging-related information by using a process of receiving the second signal through the first module.

With reference to the third aspect, in some implementations of the third aspect, the preset condition is: Signal quality of the serving cell of the terminal device in a fourth time period is greater than or equal to a second threshold, or a signal quality variation of the serving cell in the fourth time period is less than or equal to a third threshold.

According to the foregoing technical solution, when a distance between the terminal device and the network device is short (for example, the signal quality of the serving cell of the terminal device in the fourth time period is greater than or equal to the second threshold), or when a moving speed of the terminal device is low (for example, the signal quality variation of the serving cell in the fourth time period is less than or equal to the third threshold), the terminal device may wake up the first module.

With reference to the third aspect, in some implementations of the third aspect, that the terminal device receives a third signal through a second module includes: If the terminal device receives the second signal through the first module, the terminal device receives the third signal through the second module.

According to a fourth aspect, a communication method is provided. The method may be performed by a terminal device, or may be performed by a chip, a chip system, or a circuit configured in a terminal device. This is not limited in this application.

The method may include: The terminal device receives a third signal, where the third signal indicates paging-related second information; and if a serving cell of the terminal device meets a preset condition, the terminal device receives a second signal, where the second signal indicates paging-related first information.

According to the foregoing technical solution, when the preset condition is met, the terminal device may determine to receive paging-related information by using a procedure of receiving the second signal.

With reference to the fourth aspect, in some implementations of the fourth aspect, the method further includes: After a fifth time period, the terminal device determines whether the serving cell of the terminal device meets the preset condition.

With reference to the fourth aspect, in some implementations of the fourth aspect, the preset condition is: Signal quality of the serving cell of the terminal device in a fourth time period is greater than or equal to a second threshold, or a signal quality variation of the serving cell in the fourth time period is less than or equal to a third threshold.

With reference to the fourth aspect, in some implementations of the fourth aspect, that the terminal device receives a third signal includes: If the terminal device receives the second signal, the terminal device receives the third signal.

With reference to the first aspect to the fourth aspect, in some implementations, the paging-related first information includes information about one or more terminal devices that need to receive paging, and/or information about one or more terminal devices that do not need to receive paging.

With reference to the first aspect to the fourth aspect, in some implementations, the third signal is any one of the following: a paging early indication PEI, a paging physical downlink control channel paging PDCCH, or a paging message paging message.

According to a fifth aspect, a communication apparatus is provided. The apparatus may include a first module, and the first module is configured to perform the method performed by the first module in any one of the implementations of the second aspect or the third aspect. Optionally, the apparatus includes a second module, and the second module is configured to perform the method performed by the second module in any one of the implementations of the second aspect or the third aspect.

According to a sixth aspect, a communication apparatus is provided. The apparatus is configured to perform the method provided in any one of the first aspect to the fourth aspect. Specifically, the apparatus may include units and/or modules configured to perform the method provided in any one of the implementations of the first aspect to the fourth aspect, for example, a processing unit and/or a communication unit.

In an implementation, the apparatus is a terminal device. When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a seventh aspect, a communication apparatus is provided. The apparatus includes at least one processor, configured to execute a computer program or instructions stored in a memory, to perform the method provided in any one of the implementations of the first aspect to the fourth aspect. Optionally, the communication apparatus further includes the memory, configured to store a program.

In an implementation, the apparatus is a terminal device.

In another implementation, the apparatus is a chip, a chip system, or a circuit used in a terminal device.

According to an eighth aspect, this application provides a processor, configured to perform the method provided in each of the foregoing aspects.

Unless otherwise specified, or if operations such as sending and obtaining/receiving related to the processor do not conflict with actual functions or internal logic of the processor in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a computer-readable storage medium is provided. The computer-readable storage medium stores program code to be executed by a device, and the program code includes the method provided in any one of the implementations of the first aspect to the fourth aspect.

According to a tenth aspect, a computer program product including instructions is provided. When the computer program product runs on a computer, the computer is enabled to perform the method provided in any one of the implementations of the first aspect to the fourth aspect.

According to an eleventh aspect, a chip is provided. The chip includes a processor and a communication interface. The processor reads, through the communication interface, instructions stored in a memory, to perform the method provided in any one of the implementations of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the first aspect to the fourth aspect.

According to a twelfth aspect, a communication system is provided, including the foregoing network device and terminal device.

### BRIEF DESCRIPTION OF DRAWINGS

FIG. 1 is a schematic diagram of a wireless communication system 100 applicable to an embodiment of this application;
FIG. 2 is a schematic diagram in which a terminal device receives a wake-up signal through a wake-up circuit;
FIG. 3 is a schematic diagram of a communication method 300 according to an embodiment of this application;
FIG. 4 is a schematic diagram of a communication method 400 according to another embodiment of this application;
FIG. 5 is a schematic diagram of power consumption of a primary circuit and a wake-up circuit according to another embodiment of this application;
FIG. 6 is another schematic diagram of power consumption of a primary circuit and a wake-up circuit according to another embodiment of this application;
FIG. 7 is a schematic diagram of a possible structure of a wake-up circuit according to an embodiment of this application;
FIG. 8 is a schematic diagram of energy detection of a wake-up circuit according to an embodiment of this application;
FIG. 9 is a schematic diagram in which a first signal is associated with a time period according to an embodiment of this application;
FIG. 10 is a schematic diagram of a state machine control signal according to an embodiment of this application;
FIG. 11 is a schematic diagram of a communication method 1100 according to still another embodiment of this application;
FIG. 12 is a schematic block diagram of a communication apparatus according to an embodiment of this application;
FIG. 13 is a schematic block diagram of another communication apparatus according to an embodiment of this application; and
FIG. 14 is a schematic block diagram of still another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC), system, an Internet of things (Internet of things, IoT) communication system, or another communication system.

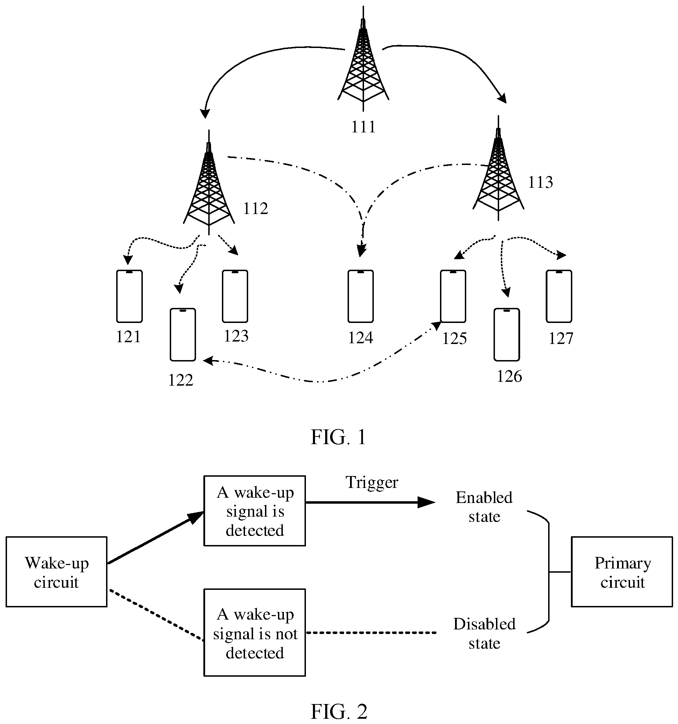

For ease of understanding embodiments of this application, a communication system applicable to embodiments of this application is first described in detail with reference to FIG. 1.

FIG. 1 is a schematic diagram of a wireless communication system applicable to an embodiment of this application. As shown in FIG. 1, the wireless communication system may include at least one network device, for example, a network device 111 and a network device 112 shown in FIG. 1. The wireless communication system may further include at least one terminal device, for example, a terminal device 121, a terminal device 122, a terminal device 123, a terminal device 124, a terminal device 125, a terminal device 126, and a terminal device 127 shown in FIG. 1. A plurality of antennas may be configured for each of the network device and the terminal devices. The network device and the terminal devices may communicate with each other by using a multi-antenna technology.

When the network device communicates with the terminal devices, the network device may manage one or more cells, and there may be an integer quantity of terminal devices in one cell. Optionally, the network device 111 and the terminal device 121 form a single-cell communication system. Without loss of generality, a cell is denoted as a cell #1. The network device 111 may be a network device in the cell #1. In other words, the network device 111 may serve a terminal device (for example, the terminal device 121) in the cell #1.

It should be noted that a cell may be understood as an area within a coverage area of a wireless signal of the network device.

This application may be used in a scenario in which a network device communicate with a terminal device. For example, the network device 112 may communicate with the terminal device 121, the terminal device 122, and the terminal device 123. For another example, the network device 112 and a network device 113 may communicate with the terminal device 124. This application may be further used in a scenario in which a terminal device communicates with another terminal device. For example, the terminal device 122 may communicate with the terminal device 125.

It should be understood that FIG. 1 is merely a simplified schematic diagram of an example for ease of understanding, and this application is not limited thereto. Embodiments of this application are applicable to any communication scenario in which a transmit end device communicates with a receive end device.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data to a user, for example, a handheld device or vehicle-mounted device with a wireless connection function. Currently, some terminals are, for example, a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a wearable device, a terminal device in a 5G network, and a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but is used to implement powerful functions through software support, data exchange, and cloud interaction. In a broad sense, wearable intelligent devices include full-featured and large-size devices that can implement complete or partial functions without depending on a smartphone, for example, a smart watch or smart glasses, and devices that focus on only one type of application function and need to work with another device like a smartphone, for example, various smart bands or smart accessories for monitoring physical signs.

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects a terminal device to a wireless network. The base station may cover the following various names in a broad sense, or may be replaced with the following names: for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a primary station, a secondary station, a multi-standard radio (motor slide retainer, MSR) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU (central unit-control plane (central unit-control plane, CU-CP)) node, a user plane CU (central unit-user plane (central unit-user plane, CU-UP)) node, and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

When the terminal device is in an idle (idle) state or an inactive (inactive) state, the terminal device may periodically receive paging (paging). A possible paging receiving procedure is as follows:
(1) The terminal device may obtain, through calculation, one paging frame (paging frame, PF) and a location of a paging occasion (paging occasion, PO) in the PF based on an identifier (identifier, ID) (UE ID) of the terminal device.
(2) The terminal device monitors a physical downlink control channel (physical downlink control channel, PDCCH) (which may also be referred to as a paging PDCCH) in the PO, where the PDCCH includes downlink control information (downlink control information, DCI) (which may also be referred to as paging DCI).
(3) If the terminal device detects the PDCCH, the terminal device receives a physical downlink shared channel (physical downlink shared channel, PDSCH) (which may also be referred to as a paging PDSCH) at a location scheduled by the PDCCH. The PDSCH includes a paging message (paging message), and the paging message may indicate which terminal devices are paged. It may be understood that a plurality of terminal devices may detect a PDCCH in a same PO, and receive a PDSCH at a location scheduled by the PDCCH. A paging message included in the PDSCH may indicate which terminal devices in the plurality of terminal devices are actually paged.

Optionally, the terminal device may further receive a paging early indication (paging early indication, PEI) before monitoring the paging PDCCH in the PO. The PEI may indicate whether paging is sent in the PO associated with the PEI.

It should be understood that the paging receiving procedure is merely an example for description. For example, refer to a related standard. This is not limited in this application.

Generally, regardless of whether the terminal device performs the paging receiving procedure in the idle state or the inactive state, or the terminal device receives data in a connected mode, a same receiving module (or receiver, or receiver circuit) is used. In this application, for ease of description, a receiving module that completes these functions (or performs related steps) is referred to as a primary circuit.

When the terminal device receives paging through the primary circuit, power consumption is high. For example, when receiving the paging, the terminal device first needs to receive a downlink signal by using a receiving module of the primary circuit, and then the terminal device further needs to perform blind detection on a PDCCH, decode a received PDSCH, and the like. These cause high power consumption. In addition, because the primary circuit is complex, reference power consumption (or static power consumption) of the primary circuit during operation is high.

To reduce power consumption caused by receiving the paging by the terminal device, a possible method is as follows: The terminal device may receive a wake-up signal (wake-up signal/radio, WUS/WUR) through a separate low-power small circuit. The wake-up signal indicates paging-related information, and the paging-related information may include, for example, whether one terminal device or a group of terminal devices are paged. The low-power small circuit may be implemented by using a separate small circuit or chip with a simple structure, and has low power consumption.

It should be understood that the low-power small circuit may be, for example, referred to as a wake-up receiver (wake-up receiver, WUR), or may be referred to as a wake-up circuit, a low-power circuit, or the like. A name of the low-power small circuit is not limited in this application. In this application, for ease of description, the low-power small circuit is referred to as a wake-up circuit.

It should be further understood that the wake-up signal is merely an example name, and a name of the wake-up signal is not limited in this application.

For example, FIG. 2 is a schematic diagram in which the terminal device receives the wake-up signal through the wake-up circuit.

As shown in FIG. 2, the wake-up signal is received through the wake-up circuit. When the wake-up circuit does not detect the wake-up signal, the primary circuit is in a sleep state. After detecting the wake-up signal, the wake-up circuit triggers wake-up of the primary circuit. In other words, the primary circuit is in an enabled state (or referred to as an operating state, or referred to as an active state). After the primary circuit is woken up, the terminal device may perform a paging receiving process.

It should be understood that FIG. 2 is mainly described by using an example in which the wake-up signal indicates a part of paging-related information. This is not limited herein. For example, the wake-up signal may alternatively indicate entire paging-related information. In this case, after the primary circuit is woken up, random access and the like may be performed.

Receiver sensitivity of the wake-up circuit is worse than receiver sensitivity of the primary circuit, and a coverage area of the wake-up signal is smaller than a coverage area of a downlink signal of a normal cellular network. When the terminal device is located at an edge of the coverage area of the wake-up signal, the terminal device may not be able to correctly receive the wake-up signal through the wake-up circuit, and therefore cannot perform the paging receiving process (for example, receiving a paging message) and/or initiate random access through the primary circuit. Consequently, the terminal device is in a state in which the terminal device cannot be paged.

This application provides a solution to resolve the problem.

It may be understood that the term "and/or" in this specification describes only an association relationship between associated objects and indicate that three relationships may exist. For example, A and/or B may indicate the following three cases: Only A exists, both A and B exist, and only B exists. In addition, the character "/" in this specification generally indicates an "or" relationship between the associated objects.

It may be further understood that the following mainly uses a "signal" as an example for description. The "signal" may also be replaced with a "sequence" or a "sequence of a signal ". A person skilled in the art should understand a meaning of a relationship between a signal and a sequence. For example, after obtaining a sequence of a signal, the network device may map the sequence of the signal that is of a specific length to a transmission resource (for example, a time-frequency resource) to generate the signal, and send the signal to the terminal device.

With reference to the accompanying drawings, the following describes in detail embodiments provided in this application. Embodiments provided in this application may be applied to the wireless communication system shown in FIG. 1. This is not limited.

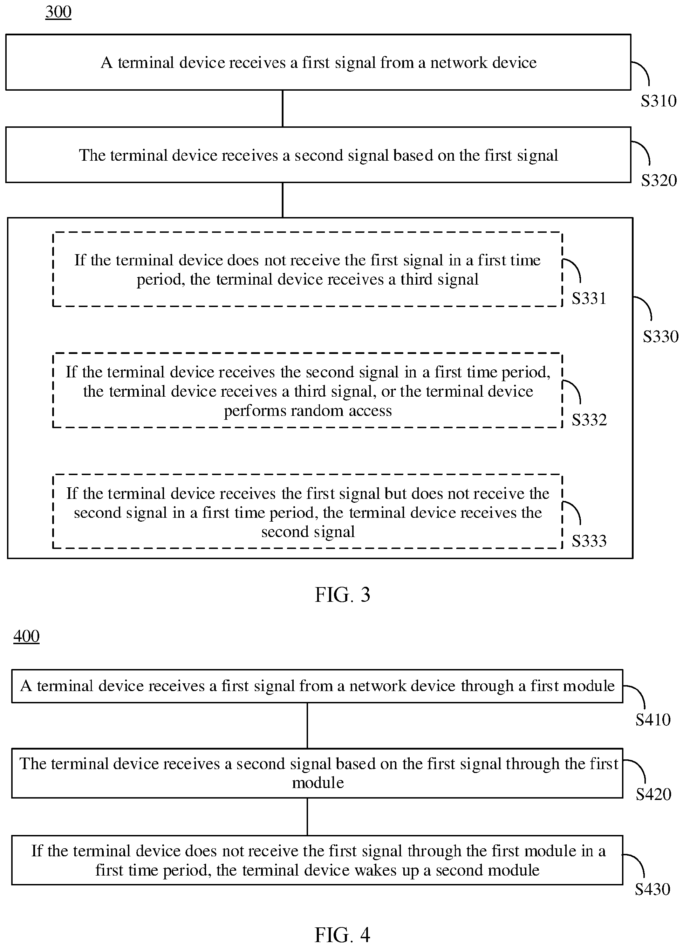

FIG. 3 is a schematic diagram of a communication method 300 according to an embodiment of this application. The method 300 may include the following steps.

S310: A terminal device receives a first signal from a network device.

In a first example, the first signal may indicate (or be used to characterize, represent, or determine) that the terminal device receives (or detects, or monitors) a second signal or the terminal device receives a third signal. Specifically, if the terminal device receives the first signal, the terminal device may determine to receive the second signal. If the terminal device does not receive the first signal, that is, if the terminal device does not receive the first signal in a period of time (a first time period described below), the terminal device may determine to receive the third signal. Both the second signal and the third signal indicate paging-related information. For differentiation, paging-related information indicated by the second signal is referred to as paging-related first information, and paging-related information indicated by the third signal is referred to as paging-related second information. The second signal and the third signal are described in detail with reference to S320 and S330 below.

As described above, it is assumed that the terminal device includes a primary circuit and a wake-up circuit. The terminal device may receive the first signal from the network device through the wake-up circuit, the terminal device may receive the second signal through the wake-up circuit, and the terminal device may receive the third signal through the primary circuit. Therefore, a function of the first signal may also be described as follows: The first signal may indicate whether the terminal device can receive the paging-related information through the wake-up circuit.

In a second example, the first signal may indicate whether a second signal can be received through a wake-up circuit. Specifically, if the terminal device receives the first signal, the terminal device determines that the second signal can be received through the wake-up circuit. If the terminal device does not receive the first signal, that is, if the terminal device does not receive the first signal in a period of time (for example, a first time period), the terminal device determines that the second signal cannot be received through the wake-up circuit.

In a third example, the first signal may indicate whether a third signal can be received through a primary circuit. Specifically, if the terminal device receives the first signal, the terminal device determines that the third signal cannot be received through the primary circuit. If the terminal device does not receive the first signal, that is, if the terminal device does not receive the first signal in a period of time (for example, a first time period), the terminal device determines that the third signal can be received through the primary circuit.

In a fourth example, the first signal may indicate to receive a second signal through a wake-up circuit or receive a third signal through a primary circuit. Specifically, if the terminal device receives the first signal, the terminal device determines to receive the second signal through the wake-up circuit. If the terminal device does not receive the first signal, that is, if the terminal device does not receive the first signal in a period of time (for example, a first time period), the terminal device determines to receive the third signal through the primary circuit.

It may be understood that the foregoing four examples are merely possible definitions of the first signal that are listed from different perspectives. This application is not limited thereto. Any solution in which the terminal device can determine, based on whether the first signal is received, to receive the second signal or receive the third signal is applicable to embodiments of this application. In addition, the first signal may further have another function.

In addition, the first signal may be a newly added signal, or the first signal may be a reused existing signal (for example, a reference signal or a synchronization signal). This is not limited. Any signal that can implement the foregoing function is applicable to embodiments of this application.

In addition, the first signal may be a periodically transmitted signal. In other words, the network device periodically sends the first signal. For ease of description, a periodicity of the first signal is denoted as T. T may be predefined, or may be configured by a network side for the terminal device, or may be preset inside the terminal device. This is not limited.

Transmission parameters of the first signal and the second signal may be the same or may be different. Optionally, a transmission parameter of the first signal and/or a transmission parameter of the second signal are/is different from a transmission parameter of the third signal. The following provides detailed descriptions with reference to content in an aspect 1.

S320: The terminal device receives the second signal based on the first signal.

The terminal device receives the first signal from the network device, and therefore the terminal device determines to receive the second signal. "Receiving" may alternatively be replaced with "detecting or monitoring". For example, "the terminal device receives the second signal" may be replaced with "the terminal device detects or monitors the second signal". It may be understood that, in S320, the terminal device does not necessarily receive the second signal.

The second signal indicates the paging-related first information.

In a possible case, the paging-related first information may indicate a part of paging information. In other words, the second signal carries the part of paging information. In this case, if the terminal device receives the second signal, the terminal device may determine, based on the received second signal, to receive the third signal (or start to perform a paging receiving procedure). FIG. 2 is used as an example. In this case, the second signal may be the wake-up signal in FIG. 2. For example, the paging-related first information includes information about one or more terminal devices that need to receive paging, and/or information about one or more terminal devices that do not need to receive paging. In this example, after receiving the second signal, the terminal device may determine whether the terminal device may be paged. If the terminal device may be paged, the terminal device receives the third signal, to perform the paging receiving procedure.

In another possible case, the paging-related first information may indicate complete paging information. In other words, the second signal carries the complete paging information. The complete paging information may be understood as information received in the paging receiving procedure. For example, the paging-related first information may be a UE ID. In this case, if the terminal device receives the second signal, the terminal device may determine, based on the received second signal, whether the terminal device is paged. If the terminal device is paged, random access is initiated.

It is assumed that the terminal device may receive the second signal through the wake-up circuit. In this case, the second signal may alternatively indicate a paging-related signal received by the terminal device through the wake-up circuit.

The method 300 further includes step S330.

In a first possible case, step S330 is step S331.

S331: If the terminal device does not receive the first signal in the first time period, the terminal device receives the third signal.

Duration (referred to as duration #1 for differentiation) of the first time period may be the periodicity T of the first signal, or may be greater than T. When the duration #1 is greater than T, for example, the duration #1 may be a plurality of Ts, or the duration #1 may be (T+Δ), where Δ is a number greater than 0. This is not limited. For the terminal device, a manner of obtaining the duration #1 is not limited. For example, the duration #1 may be predefined (for example, defined in a protocol), or may be configured by the network side for the terminal device, or may be preset inside the terminal device, or may be duration determined by the terminal device (for example, duration estimated based on a historical situation, or duration determined based on T and a relationship between T and the duration #1). This is not limited.

A start moment of the first time period may be, for example, a moment at which the terminal device receives the first signal, or may be a moment after a moment at which the terminal device receives the first signal. This is not limited.

If the terminal device does not receive the first signal in the first time period, the terminal device determines to receive the third signal. In other words, the terminal device receives the third signal after the first time period. Alternatively, it may be understood that if the terminal device does not receive the first signal in the first time period, the terminal device determines to receive the paging-related information in a manner or procedure of receiving the third signal. That the terminal device receives the paging-related information in the manner or procedure of receiving the third signal may indicate, for example, that the terminal device receives the third signal, and performs the paging receiving procedure based on the received third signal.

The third signal indicates the paging-related second information. In a possible case, the paging-related second information may indicate information received in the paging receiving procedure. For example, the third signal may be any one of the following: a PEI, a paging PDCCH (paging PDCCH), or a paging message (paging message)

In a second possible case, step S330 is step S332.

S332: If the terminal device receives the second signal in the first time period, the terminal device receives the third signal, or the terminal device performs random access.

For example, if the second signal carries a part of paging information, after receiving the second signal, the terminal device may determine to receive the third signal (or start to perform the paging receiving procedure). For another example, if the second signal carries complete paging information, the terminal device may initiate random access after receiving the second signal.

In a third possible case, step S330 is step S333.

S333: If the terminal device receives the first signal but does not receive the second signal in the first time period, the terminal device receives the second signal.

Alternatively, it may be understood that, if the terminal device receives the first signal but does not receive the second signal in the first time period, the terminal device determines to receive the paging-related information in a manner or procedure of receiving the second signal. That the terminal device receives the paging-related information in the manner or procedure of receiving the second signal may indicate, for example, that the terminal device receives the second signal, determines, based on the received second signal, whether the terminal device may be paged, and if the terminal device may be paged, receives the third signal, to perform the paging receiving procedure; or for another example, that the terminal device receives the second signal, determines, based on the received second signal, whether the terminal device is paged, and if the terminal device is paged, initiates random access.

In a possible implementation, the first time period may be implemented by using a timer (referred to as a timer #1 for differentiation), and a running time length of the timer #1 is the duration #1.

For example, after receiving the first signal, the terminal device starts/restarts the timer #1 by using the duration #1 as the time length. For example, in a running phase (or a running period) of the timer #1, if the terminal device does not receive the first signal from the network device, the terminal device receives the third signal after the timer #1 ends (or times out). For another example, in a running phase of the timer #1, if the terminal device receives the second signal from the network device, the terminal device determines to receive the third signal or the terminal device performs random access. In addition, the terminal device may further stop the timer #1. For another example, in a running phase of the timer #1, if the terminal device receives the first signal from the network device, the terminal device restarts the timer #1.

Based on this manner, behavior of the terminal device may be controlled by using the timer. This not only can reduce signaling overheads caused by notifying the terminal device by the network device, but also can be easily implemented.

The foregoing describes, with reference to the method 300, the solutions provided in this application from a perspective of a signal. According to the method 300 provided in the foregoing embodiments, the terminal device may determine, by using the first signal, a manner (or a procedure) of receiving paging. Specifically, both the second signal and the third signal indicate the paging-related information. If the terminal device does not receive the first signal in the first time period, the terminal device determines to receive the paging-related information by using the procedure of receiving the third signal (for example, perform the paging receiving procedure based on the received third signal). If the terminal device receives the first signal in the first time period, the terminal device determines to receive the paging-related information by using the procedure of receiving the second signal (for example, determines, based on the received second signal, whether the terminal device may be paged, and if the terminal device may be paged, receives the third signal, to perform the paging receiving procedure; or determines, based on the received second signal, whether the terminal device is paged, and if the terminal device is paged, initiates random access). In this manner, it can be resolved that when the terminal device is located at an edge of a coverage area of the second signal (for example, a wake-up signal), the terminal device may not be able to correctly receive the second signal through the wake-up circuit, and therefore cannot perform the paging receiving process through the primary circuit. For example, when the terminal device is located at the edge of the coverage area of the second signal, the terminal device may not be able to receive the first signal and the second signal through the wake-up circuit. According to the method 300, when the terminal device does not receive the first signal in the first time period, the terminal device determines to receive the third signal (for example, receive a paging message), so that a paging receiving process can be performed, to avoid paging missing caused by a failure to receive the second signal.

With reference to the method 400, the following describes the solutions provided in this application from perspectives of a primary circuit and a wake-up circuit.

FIG. 4 is a schematic diagram of a communication method 400 according to another embodiment of this application. The method 400 may be applied to a terminal device, and the terminal device includes a first module and a second module. For example, power consumption of the first module may be less than power consumption of the second module. The method 400 may include the following steps.

S410: The terminal device receives a first signal from a network device through the first module.

The first module may be, for example, the wake-up circuit in FIG. 2, or may be a receiving module of the wake-up circuit. For ease of understanding, in this application, an example in which the first module is a wake-up circuit is used for description.

For the first signal, refer to the descriptions in the method 300. Details are not described herein again.

S420: The terminal device receives a second signal based on the first signal through the first module.

After receiving the first signal from the network device, the terminal device determines to receive the second signal through the wake-up circuit.

For the second signal, refer to the descriptions in the method 300. Details are not described herein again.

S430: The terminal device wakes up the second module if the terminal device does not receive the first signal through the first module or receives the second signal through the first module in a first time period.

The second module may be, for example, the primary circuit in FIG. 2, or may be a receiving module of the primary circuit. For ease of understanding, in this application, an example in which the second module is a primary circuit is used for description. When the terminal device receives the first signal and the second signal through the wake-up circuit, the primary circuit may be in a sleep state.

Optionally, after waking up the primary circuit, the terminal device may further disable the wake-up circuit, to reduce power consumption.

Optionally, after waking up the primary circuit, the terminal device receives the third signal through the primary circuit, or the terminal device performs random access through the primary circuit.

For example, if the second signal carries a part of paging information, after receiving the second signal through the wake-up circuit, the terminal device may wake up the primary circuit, to receive the third signal through the primary circuit (or perform a paging receiving procedure through the primary circuit). For another example, if the second signal carries complete paging information, after receiving the second signal through the wake-up circuit, the terminal device may determine, based on the second signal, whether the terminal device is paged. If the terminal device determines, by using the second signal, that the terminal device is paged, the terminal device may wake up the primary circuit, to perform random access through the primary circuit.

For the first time period and the third signal, refer to the descriptions in the method 300. Details are not described herein again.

For example, the first time period is implemented by using a timer #1.

In a possible manner, when receiving the first signal through the wake-up circuit, the terminal device starts the timer #1 by using duration #1 as a time length. If the terminal device receives the first signal through the wake-up circuit in a running phase (or a running period) of the timer #1, the timer #1 is restarted. If the terminal device receives the second signal through the wake-up circuit in a running phase of the timer #1, the primary circuit is woken up. If the wake-up circuit does not receive the first signal in a running phase of the timer #1, the primary circuit is woken up after the timer #1 ends (or time outs).

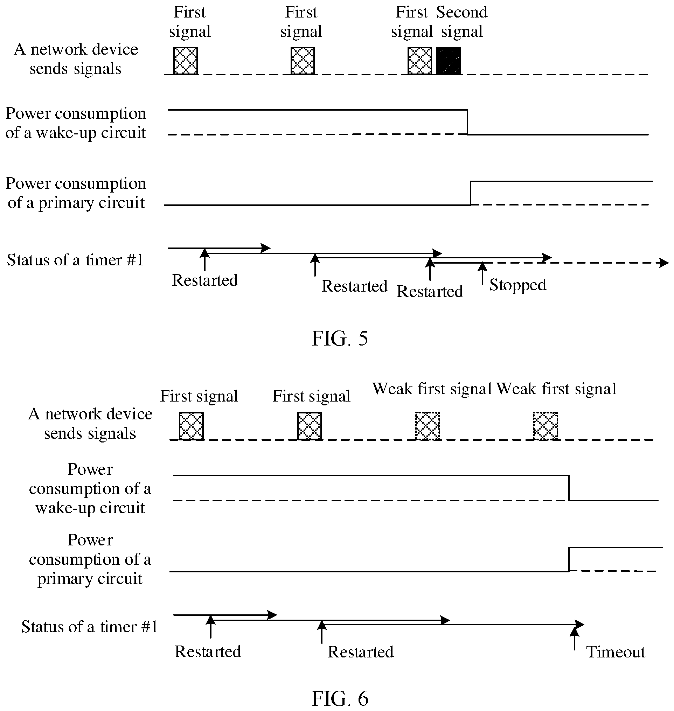

For example, FIG. 5 and FIG. 6 are schematic diagrams of power consumption of the primary circuit and the wake-up circuit according to an embodiment of this application.

As shown in FIG. 5 or FIG. 6, the network device may periodically send the first signal. When the terminal device receives the first signal through the wake-up circuit, the timer #1 is started. In the running phase of the timer #1, each time the terminal device receives the first signal through the wake-up circuit, the timer #1 is restarted.

As shown in FIG. 5, in the running phase of the timer #1, if the terminal device receives the second signal through the wake-up circuit, the terminal device wakes up the primary circuit. In addition, the terminal device may further disable the wake-up circuit, and the timer #1 may also be stopped.

As shown in FIG. 6, in the running phase of the timer #1, or before the timer #1 ends (or times out), the terminal device may not receive, through the wake-up circuit, the first signal sent by the network device. For example, in some cases, if a distance between the terminal device and the network device becomes longer, a block occurs between the terminal device and the network device, or the like, the first signal sent by the network device may become weak. In this case, the terminal device may not be able to receive the first signal through the wake-up circuit. Therefore, after the timer #1 ends (or times out), the terminal device wakes up the primary circuit. In addition, the terminal device may further disable the wake-up circuit, and the timer #1 may also be stopped.

For example, the terminal device may send an indication to the primary circuit through the wake-up circuit, to wake up the primary circuit. A manner of waking up the primary circuit is not limited.

According to the method 400 provided in the foregoing embodiments, when keeping the primary circuit in the sleep state, the terminal device can determine, by using the first signal through the wake-up circuit, a manner (or a procedure) of receiving paging-related information. Specifically, if the terminal device does not receive the first signal through the wake-up circuit in the first time period, the terminal device determines to wake up the primary circuit, to receive the paging-related information through the primary circuit (for example, receive a third signal through the primary circuit, and perform a paging receiving procedure based on the received third signal). If the terminal device receives the first signal in the first time period, the terminal device determines to receive the paging-related information through the wake-up circuit (for example, when the second signal carries a part of paging information, receive the second signal through the wake-up circuit; determine, based on the received second signal, whether the terminal device may be paged; and if the terminal device may be paged, receive the third signal through the primary circuit, to perform the paging receiving procedure; or for another example, when the second signal carries complete paging information, receive the second signal through the wake-up circuit; determine, based on the received second signal, whether the terminal device is paged; and if the terminal device is paged, initiate random access through the primary circuit). In this manner, it can be resolved that when the terminal device is located at an edge of a coverage area of the second signal (for example, a wake-up signal), the terminal device may not be able to correctly receive the second signal through the wake-up circuit, and therefore cannot perform the paging receiving process through the primary circuit. For example, when the terminal device is located at the edge of the coverage area of the second signal, the terminal device may not be able to correctly receive the first signal and the second signal through the wake-up circuit. According to the method 300, when the terminal device does not receive the first signal in the first time period, the terminal device wakes up the primary circuit, to perform the paging receiving process through the primary circuit, so as to avoid paging missing caused by a failure to receive the second signal.

The following describes the solutions provided in this application from two aspects. Solutions in the following aspects may be used in the embodiment of the method 300, or may be used in the embodiment of the method 400.

### Aspect 1: transmission parameter of the first signal

Transmission parameters of the first signal and the second signal may be the same or may be different. A transmission parameter indicates a parameter for transmitting a signal, namely, a parameter for transmitting the first signal and a parameter for transmitting the second signal. For example, the transmission parameter may include one or more of the following: a waveform, a modulation scheme, and a frequency domain resource.

The following separately describes these parameters.

### (1) Modulation scheme

The modulation scheme indicates a scheme for modulating the first signal and the second signal.

For example, modulation schemes of the first signal and the second signal are the same. For example, the modulation schemes of the first signal and the second signal are amplitude shift keying (amplitude shift keying, ASK). For example, the modulation schemes may be on-off keying (on-off keying, OOK). The OOK modulation scheme can ensure a power consumption gain as much as possible. Further, if the terminal device receives the first signal and the second signal through the wake-up circuit, the wake-up circuit may further detect the first signal and the second signal by using an envelope detection method.

For another example, modulation schemes of the first signal and the second signal are different. For example, a modulation scheme of the second signal is the OOK, and a modulation scheme of the first signal is another modulation scheme, for example, any one of the following: pi/2-binary phase shift keying (binary phase shift keying, BPSK), quadrature phase shift keying (quadrature phase shift keying, QPSK), 16 quadrature amplitude modulation (quadrature amplitude modulation, QAM), 64 QAM, 256 QAM, phase shift keying (phase shift keying, PSK), amplitude phase shift keying (amplitude phase shift keying, APSK), non-uniform QAM, and the like.

If the terminal device receives the first signal and the second signal through the wake-up circuit, the terminal device may determine the modulation scheme of the first signal and/or the modulation scheme of the second signal based on a demodulation capability of the wake-up circuit.

A modulation scheme of the third signal may be different from the modulation scheme of the first signal and the modulation scheme of the second signal. Alternatively, a modulation scheme of the third signal may be the same as the modulation scheme of the first signal, and may be different from the modulation scheme of the second signal. Alternatively, a modulation scheme of the third signal may be different from the modulation scheme of the first signal, and may be the same as the modulation scheme of the second signal.

### (2) Waveform

A waveform indicates a waveform for transmitting the first signal and the second signal.

For example, waveforms of the first signal and the second signal are the same. For example, the waveforms of the first signal and the second signal are the OOK. For another example, waveforms of the first signal and the second signal are different. For example, a waveform of the second signal is the OOK, and a waveform of the first signal is another waveform, for example, an orthogonal frequency division multiplexing (orthogonal frequency division multiplexing, OFDM) waveform.

A waveform of the third signal may be different from the waveform of the first signal and the waveform of the second signal. Alternatively, a waveform of the third signal may be the same as the waveform of the first signal, and may be different from the waveform of the second signal. Alternatively, a waveform of the third signal may be different from the waveform of the first signal, and may be the same as the waveform of the second signal.

### (3) Frequency domain resource

The frequency domain resource indicates a frequency domain resource used for transmitting the first signal and the second signal. It is assumed that the first signal is a signal transmitted at a first frequency location, and the second signal is a signal transmitted at a second frequency location. The following describes two cases.

Case 1: The first frequency location is the same as the second frequency location.

That the first frequency location is the same as the second frequency location may indicate, for example, that the first frequency location and the second frequency location are in a same frequency band (band), or the first frequency location and the second frequency location are in a same carrier (carrier), or the first frequency location and the second frequency location are in a same bandwidth part (bandwidth part, BWP) of a same carrier, or the first frequency location and the second frequency location are in a same sub-band (sub-band) of a same carrier, or the first frequency location and the second frequency location are in a same carrier and occupy a same physical resource block (physical resource block, PRB) or PRB group.

In Case 1, it is assumed that the modulation schemes/waveforms of the first signal and the second signal are the same, for example, both are the OOK. In this case, the first signal and the second signal may be differentiated through signal detection (or referred to as signal comparison, or referred to as sequence comparison).

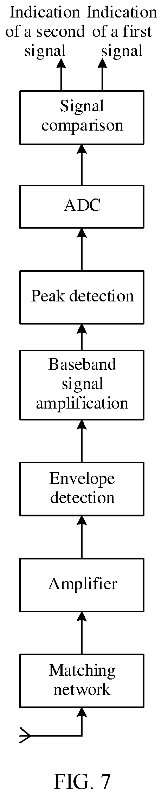

For example, FIG. 7 is a schematic diagram of a possible structure of the wake-up circuit according to an embodiment of this application.

As shown in FIG. 7, after the wake-up circuit receives signals, for example, after receiving the signals through an antenna, out-of-band interference may be filtered out through a matching network (matching network), and signals at frequency locations of the first signal and the second signal are reserved. Then, the signals are amplified through an amplifier. Then, envelope detection may be performed on amplified signals, for example, signal envelope detection is performed through an envelope detector, so that a radio frequency/intermediate frequency signal may be converted into a baseband signal. Then, amplification processing may be performed on the obtained baseband signal. For example, the baseband signal is amplified through a baseband signal amplifier. Then, peak detection may be performed on an amplified baseband signal. For example, the amplified baseband signal is shaped through a peak detector. Then, a shaped signal may be converted into a digital signal (namely, a 0/1 bit string). For example, an analog signal is converted into a digital signal through an analog-to-digital converter (analog-to-digital converter, ADC). Finally, whether the signal is the first signal or the second signal is determined through signal comparison, and a result is output. It should be understood that the foregoing procedure is merely an example for description, and this application is not limited thereto.

It is assumed that a signal comparison module performs signal comparison (or differentiation). In a possible implementation, the signal comparison module may compare the obtained 0/1 bit string with a signal (for example, a sequence of the first signal or a sequence of the second signal) that is expected to be received, to determine whether the received signal is the first signal or the second signal. Specifically, for example, the signal comparison module may compare the obtained 0/1 bit string with the sequence of the first signal. If the obtained 0/1 bit string is the same as the sequence of the first signal, it is determined that the received signal is the first signal; or if the obtained 0/1 bit string is different from the sequence of the first signal, the obtained 0/1 bit string may be compared with the sequence of the second signal, and if the obtained 0/1 bit string is the same as the sequence of the second signal, it is determined that the received signal is the second signal. Alternatively, the signal comparison module may compare the obtained 0/1 bit string with the sequence of the first signal. If the obtained 0/1 bit string is the same as the sequence of the first signal, it is determined that the received signal is the first signal; or if the obtained 0/1 bit string is different from the sequence of the first signal, it may be determined that the received signal is the second signal. For another example, the signal comparison module may compare the obtained 0/1 bit string with the sequence of the second signal. If the obtained 0/1 bit string is the same as the sequence of the second signal, it is determined that the received signal is the second signal; or if the obtained 0/1 bit string is different from the sequence of the second signal, the obtained 0/1 bit string is compared with the sequence of the first signal, and if the obtained 0/1 bit string is the same as the sequence of the first signal, it is determined that the received signal is the first signal. Alternatively, the signal comparison module may compare the obtained 0/1 bit string with the sequence of the second signal. If the obtained 0/1 bit string is the same as the sequence of the second signal, it is determined that the received signal is the second signal; or if the obtained 0/1 bit string is different from the sequence of the second signal, it is determined that the received signal is the first signal.

It can be learned from the foregoing that, the signal comparison module in the wake-up circuit is improved, so that the signal comparison module can differentiate between the first signal and the second signal. In this way, performance of the wake-up circuit can be improved at low costs.

Case 2: The first frequency location is different from the second frequency location.

That the first frequency location is different from the second frequency location may indicate, for example, that the first frequency location and the second frequency location are in different frequency bands, or the first frequency location and the second frequency location are in different carriers, or the first frequency location and the second frequency location are in different BWPs of a same carrier, or the first frequency location and the second frequency location are in different sub-bands of a same carrier, or the first frequency location and the second frequency location are in a same carrier and occupy different PRBs (or PRB groups).

In this case, whether the first signal is received may be determined through energy detection. For example, the terminal device (or the terminal device through the wake-up circuit) performs energy detection at the frequency location (namely, the first frequency location) of the first signal, and detects energy received at the first frequency location within a period of time. If the energy is greater than a threshold (referred to as a threshold #1 for differentiation), it is considered that the first signal is received; or if the energy is less than the threshold #1, it is considered that the first signal is not received. The period of time may be the entire first time period, or may be a "time domain unit" in the first time period. If energy in the period of time is greater than the threshold #1, it is considered that the first signal is received. A time domain unit (also referred to as a time unit) may be one symbol or several symbols, one or more mini-slots (mini-slot), one or more slots (slot), one or more subframes (subframe), one or more milliseconds, or the like. The foregoing enumerated time domain unit sizes are merely intended to facilitate understanding of the solutions of this application, and do not limit the protection scope of embodiments of this application.

A case in which the energy is equal to the threshold #1 is not limited. If the detected energy is equal to the threshold #1, it is considered that the first signal is not received. For another example, if the detected energy is equal to the threshold #1, it is considered that the first signal is received. For another example, the case in which the detected energy is equal to the threshold #1 may alternatively be used for another indication. For a case of being equal to a threshold in the following, refer to the descriptions herein. Details are not described in the following again.

The threshold #1 may be a predefined threshold, and may be configured by a network side for the terminal device, or may be preset inside the terminal device. This is not limited.

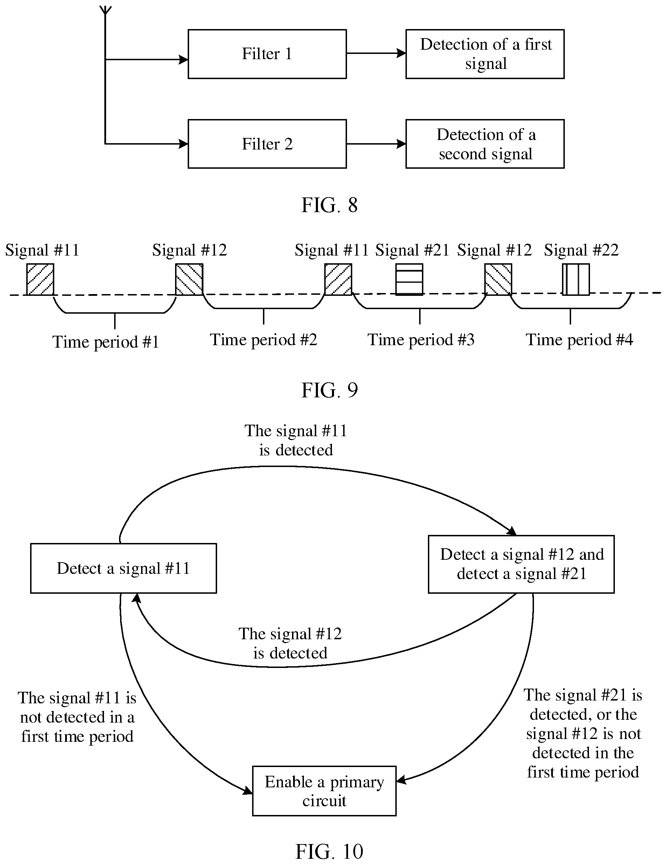

For example, FIG. 8 is a schematic diagram of energy detection of the wake-up circuit according to an embodiment of this application.

As shown in FIG. 8, a signal that is not at the frequency location (namely, the first frequency location) of the first signal is filtered out through a filter 1, a signal at the first frequency location is reserved, and the first signal is detected. If the first signal is detected, for example, through energy detection, the timer #1 may be restarted; or if the first signal is not detected, the primary circuit may be woken up. A signal that is not at the frequency location (namely, the second frequency location) of the second signal is filtered out through a filter 2, a signal at the second frequency location is reserved, and the second signal is detected. If the second signal is detected, for example, through energy detection, the primary circuit may be woken up.

In this case, energy detection may be performed on the first signal, to determine whether the first signal is received. This implementation is simpler. In addition, because energy detection is performed on the first signal, a requirement on the first signal is not high, and therefore a design is more flexible. For example, the first signal may use any modulation scheme/waveform. Alternatively, an existing signal (for example, a reference signal or a synchronization signal) may be reused, and no additional signal needs to be designed, so that resource occupation can be reduced. For example, the network device may periodically send a synchronization signal block (synchronization signal block, SSB). Therefore, the SSB may be reused. In other words, the SSB is used as the first signal. FIG. 8 is used as an example. The filter 1 may be tuned to a frequency at which the network device sends the SSB, and energy detection is performed on an SSB signal.

It should be understood that FIG. 8 is merely an example for description, and this application is not limited thereto.

It should be further understood that the foregoing is merely an example for description, and this is not limited. For example, the first signal and the second signal may be of a same type or different types. In addition, if the first signal is a specific type of signal, the first signal may include a plurality of specific signals or specific instances. If the second signal is a specific type of signal, the second signal may include a plurality of specific signals or specific instances. Specific descriptions are provided below with reference to FIG. 9.

The foregoing describes the transmission parameter of the first signal with reference to the aspect 1, and the following describes a configuration of the first signal with reference to an aspect 2.

### Aspect 2: configuration of the first signal

The first signal may be configured by using at least any one of the following solutions.

Solution 1: The first signal is predefined (for example, predefined in a protocol).

According to the solution 1, the first signal may be predefined, and a network device that can support the first signal may periodically send the first signal. In this way, when the terminal device is in a moving state, the terminal device may determine, based on the first signal, whether to receive the second signal through the wake-up circuit, without considering a cell to which the terminal device moves.

It should be understood that, in the aspect 2, an example in which the first signal is used to determine whether to receive the second signal through the wake-up circuit is mainly used for description. For a possible function definition of the first signal, refer to the descriptions in the method 300. Details are not described herein again.

Solution 2: The first signal is configured by a core network device.

According to the solution 2, the core network device may configure the first signal for the terminal device.

In a possible manner, the core network device notifies the terminal device of the first signal and the periodicity T of the first signal. For example, the terminal device performs signaling interaction (for example, by using non-access stratum (non-access stratum, NAS) signaling) with the core network device. In the interaction process, the terminal device is notified of the first signal and T.

In another possible manner, the network device notifies the terminal device of the first signal and T. For example, the first signal and T are carried in RRC signaling (for example, dedicated RRC (dedicated RRC) signaling or broadcast RRC signaling).

In still another possible manner, the core network device or the network device notifies the terminal device of the first signal. For example, the terminal device determines T based on the first signal. If there is a correspondence between the first signal and T, the terminal device pre-stores the correspondence, and the terminal device may determine the corresponding T based on the received first signal.

Solution 3: The first signal may be configured by the network device.

According to the solution 3, the network device may configure the first signal for the terminal device.

In a possible manner, the network device notifies the terminal device of the first signal and T. For example, the first signal and T are carried in RRC signaling (for example, dedicated RRC signaling or broadcast RRC signaling).

In another possible manner, the network device notifies the terminal device of the first signal. For example, the terminal device determines T based on the first signal. If there is a correspondence between the first signal and T, the terminal device pre-stores the correspondence, and the terminal device may determine the corresponding T based on the received first signal.

It may be understood that the foregoing three solutions are examples for description, and this application is not limited thereto.

It may be further understood that "configure" mentioned in the solution 2 and the solution 3 may be replaced with "select". For example, the core network device selects the first signal. For another example, the network device selects the first signal.

Optionally, the first signal may be associated with some information and/or devices. The following describes several examples.

Example 1: The first signal is predefined (for example, predefined in a protocol).

Based on the example 1, the first signal is associated with all network devices and terminal devices that support the feature. In other words, all network devices that support the feature send a same first signal, and all terminal devices that support the feature receive the same first signal.

Example 2: The first signal is associated with an area.

Based on the example 2, the first signal may be an area specific (area specific) signal, first signals sent by network devices in a same area are the same, and first signals sent in different areas may be different. For example, when moving in an area, the terminal device may determine, based on a first signal specific to the area, whether to receive a second signal through the wake-up circuit.

For example, the area may be a tracking area (tracking area, TA). In other words, the first signal is a tracking area specific (TA specific) signal. When moving in a TA, the terminal device may determine, based on a first signal specific to the TA, whether to receive a second signal through the wake-up circuit.

In a possible implementation, the solution 2 is used as an example. The first signal configured by the core network device is associated with an area (for example, a TA) (in other words, the core network device configures a first signal specific to the area). The core network device may configure different first signals for different areas. A network device in the area may periodically send the first signal specific to the area, and the terminal device in the area may determine, based on the first signal specific to the area, whether to receive a second signal through the wake-up circuit.

In another possible implementation, the solution 3 is used as an example. The first signal configured by the network device is associated with an area (the area may be an area within a coverage area of a wireless signal of the network device) (in other words, the network device configures a first signal specific to the area). The network device may periodically send the first signal specific to the area, and the terminal device in the area may determine, based on the first signal specific to the area, whether to receive a second signal through the wake-up circuit.

Based on the example 2, the first signal may not only be used by the terminal device to determine whether to receive the second signal through the wake-up circuit, but also may be used as an area identifier.

Example 3: The first signal is associated with a cell.

Based on the example 3, the first signal may be a cell specific (cell specific) signal, and first signals sent in different cells may be different. For example, when moving in a cell, the terminal device may determine, based on a first signal specific to the cell, whether to receive a second signal through the wake-up circuit. The first signal may be a signal specific to one or more cells. To be specific, one or more cells may send a same first signal. When moving in the one or more cells, the terminal device may determine, based on the first signal that is specific to the one or more cells, whether to receive a second signal through the wake-up circuit. The one or more cells may alternatively be in a form of a cell group (cell group).

In a possible implementation, the solution 3 is used as an example. The first signal configured by the network device is associated with a cell (the cell may be an area within a coverage area of a wireless signal of the network device) (in other words, the network device configures a first signal specific to the cell). The network device may configure different first signals for different cells. For example, the network device may determine the first signal specific to the cell based on a cell ID (for example, a cell ID modulo N, where N may be defined in a standard). The network device may periodically send the first signal specific to the cell, and the terminal device in the cell may determine, based on the first signal specific to the cell, whether to receive a second signal through the wake-up circuit.

The foregoing implementation is merely an example for description, and is not limited herein. For example, the first signal specific to the cell may be selected by the cell. In other words, different cells may select different first signals.

Optionally, the network device may further configure a first signal specific to a neighboring cell for the terminal device. In this way, after failing to receive the first signal specific to the current serving cell, the terminal device may first attempt to receive the first signal specific to the neighboring cell. If the terminal device does not receive the first signal specific to the serving cell and the first signal specific to the neighboring cell (for example, the signals are not received in the first time period), the terminal device wakes up the primary circuit to receive the third signal.

Based on the example 3, the first signal may not only be used by the terminal device to determine whether to receive the second signal through the wake-up circuit, but also may be used as a cell identifier. When the terminal device moves to a cell edge, a case in which the terminal device does not receive the first signal specific to the cell in the first time period may occur. In this case, the terminal device may wake up the primary circuit to receive the third signal. At the cell edge, the terminal device may perform radio resource management (radio resource management, RRM) measurement, and may further perform cell reselection (cell reselection). In this case, the first signal may further provide a serving cell measurement function. Specifically, the terminal device may measure the signal quality of the serving cell based on the first signal. If the signal quality of the serving cell is less than or equal to a specific threshold (which may be specifically represented as that the terminal device does not receive the first signal in a specific time length), the terminal device wakes up the primary circuit, and performs RRM measurement through the primary circuit.

Example 4: The first signal is associated with the network device.

Based on the example 4, the first signal may be a network device specific (specific) (for example, base station specific) signal, and first signals sent by different network devices may be different. For example, when moving in a coverage area of a wireless signal of a network device, the terminal device may determine, based on a first signal specific to the network device, whether to receive a second signal through the wake-up circuit.

The first signal may be a signal specific to one or more network devices. To be specific, one or more network devices may send a same first signal. When moving in the one or more network devices, the terminal device may determine, based on the first signal that is specific to the one or more network devices, whether to receive a second signal through the wake-up circuit. The one or more network devices may alternatively be in a form of a network device group (group).

In a possible implementation, the solution 2 is used as an example. The first signal configured by the core network device is associated with a network device (in other words, the core network device configures a first signal specific to the network device). The core network device may configure different first signals for different network devices. The network device may periodically send the first signal specific to the network device, and the terminal device in a coverage area of a wireless signal of the network device may determine, based on the first signal specific to the network device, whether to receive a second signal through the wake-up circuit.

In another possible implementation, the solution 3 is used as an example. The first signal configured by the network device is associated with the network device (or the network device configures the first signal specific to the network device). The network device may periodically send the first signal specific to the network device, and the terminal device in a coverage area of a wireless signal of the network device may determine, based on the first signal specific to the network device, whether to receive a second signal through the wake-up circuit.

Example 5: The first signal is associated with the terminal device.

Based on the example 5, the first signal may be a terminal device specific (UE specific) signal, and the network device may send different first signals to different terminal devices. For example, different terminal devices may determine, based on respective specific first signals, whether to receive a second signal through the wake-up circuit.

The first signal may be a signal specific to one or more terminal devices. To be specific, the network device sends the first signal. The one or more terminal devices may determine, based on the first signal specific to the one or more terminal devices, whether to receive a second signal through the wake-up circuit. The one or more terminal devices may alternatively be in a form of a terminal device group (UE group). For example, the first signal may be a signal specific to one or more terminal device groups. A manner of grouping the terminal device groups is not limited. For example, the terminal device groups may be grouped based on an area, or the terminal device groups may be grouped based on whether the first signal is shared.

In a possible implementation, the solution 2 is used as an example. The first signal configured by the core network device is associated with a terminal device (in other words, the core network device configures a first signal specific to the terminal device). The core network device may configure different first signals for different terminal devices. The network device may periodically send the first signal specific to the terminal device, and the terminal device may determine, based on the first signal specific to the terminal device, whether to receive a second signal through the wake-up circuit.

In another possible implementation, the solution 3 is used as an example. The first signal configured by the network device is associated with the terminal device (in other words, the network device configures a first signal specific to the terminal device), and the network device may configure different first signals for different terminal devices. The network device may periodically send the first signal specific to the terminal device, and the terminal device may determine, based on the first signal specific to the terminal device, whether to receive a second signal through the wake-up circuit.

Example 6: The first signal is associated with a time period.

Based on the example 6, the first signal may be a time period specific (specific) signal. The example 6 may be combined with the example 5. It is assumed that the first signal is a signal specific to the second time period. The terminal device associated with the first signal may determine, based on the first signal, whether to receive the second signal through the wake-up circuit, and transmit, in the second time period, the second signal of the terminal device associated with the first signal. For example, FIG. 9 is a schematic diagram in which the first signal is associated with a time period according to an embodiment of this application.

As described in the aspect 1, the first signal may be a type of signal, and the first signal may include a plurality of specific signals or specific instances. The second signal may also be a type of signal, and the second signal may include a plurality of specific signals or specific instances. The plurality of specific signals or specific instances may be the same or different. For example, it is assumed that the first signal includes N1 specific signals, and the second signal includes N2 specific signals. N1 and N2 are integers greater than 1, and N1 and N2 may be the same or may be different. It is assumed that both N1 and N2 are 3, the first signal includes a signal #11, a signal #12, and a signal #13, and the second signal includes a signal #21, a signal #22, and a signal #23. In a first possible design, the signal # 11, the signal #12, and the signal #13 may be separately used by different terminal devices (or terminal devices in different groups) to determine whether paging-related information can be received through the wake-up circuit. In a second possible design, the signal #21, the signal #22, and the signal #23 may correspond to different terminal devices (or terminal devices in different groups). For example, the signal #21 is a wake-up signal corresponding to a first group of terminal devices, the signal #22 is a wake-up signal corresponding to a second group of terminal devices, and the signal #23 is a wake-up signal corresponding to a third group of terminal devices. Each group of terminal devices may include one or more terminal devices (or one or more terminal device groups). In a third possible design, the signal #11 may be used by the terminal device to determine whether the signal #21 can be received through the wake-up circuit, the signal #12 may be used by the terminal device to determine whether the signal #22 can be received through the wake-up circuit, and the signal #13 may be used by the terminal device to determine whether the signal #23 can be received through the wake-up circuit. The signal #21, the signal #22, and the signal #23 may correspond to different terminal devices (or terminal devices in different groups).

As shown in FIG. 9, the signal #11 and the signal #12 represent specific signals included in the first signal, and the signal #21 and the signal #22 represent specific signals included in the second signal. It is assumed that a first signal and a second signal that correspond to UE 1 are respectively the signal #11 and the signal #12, and a first signal and a second signal that correspond to UE 2 are respectively the signal #21 and the signal #22.

As shown in FIG. 9, the signal #11 is associated with a time period #1 and a time period #3. In this case, the network device may send, in the time period #1 and the time period #3, the second signal (for example, the signal #21) of the UE 1 corresponding to the signal #11, and the UE 1 may receive the signal #21 in the time period #1 and the time period #3. The signal #12 is associated with a time period #2 and a time period #4. In this case, the network device may send, in the time period #2 and the time period #4, the second signal (for example, the signal #22) of the UE 2 corresponding to the signal #12, and the UE 2 may receive the signal #22 in the time period #2 and the time period #4. The time period #1 and the time period #3 may be understood as available sending intervals of the signal #21 (namely, the second signal of the UE 1), and the time period #2 and the time period #4 may be understood as available sending intervals of the signal #22 (namely, the second signal of the UE 2).

It should be understood that FIG. 9 is merely an example for description, and this application is not limited thereto. For example, the UE 1 in FIG. 9 may be replaced with one or more terminal devices, and the UE 1 in FIG. 9 may alternatively be replaced with one or more terminal device groups. For another example, the UE 2 in FIG. 9 may alternatively be replaced with a terminal device (or another terminal device) other than one or more terminal devices, and the UE 2 in FIG. 9 may alternatively be replaced with one or more terminal device groups (or another terminal device group) other than one or more terminal devices.

Optionally, the UE 1 may receive the signal #21 in the time period #1 and the time period #3, and do not receive the signal #21 or enable a wake-up circuit of the UE 1 to be in a sleep state in the time period #2 and the time period #4. The UE 2 may receive the signal #22 in the time period #2 and the time period #4, and do not receive the signal #22 or enable a wake-up circuit of the UE 2 to be in a sleep state in the time period #1 and the time period #3.

Based on the example 6, when receiving the second signal through the wake-up circuit, the terminal device does not determine specific time at which the network device sends the second signal. Timing may be performed to an extent by using a plurality of first signals. In this case, based on differentiating between different terminal devices (or different terminal device groups) by using second signals, the different terminal devices (or different terminal device groups) may be further differentiated in a time division multiplexing (time division multiplexing, TDM) manner, to reduce a probability that the terminal device is mistakenly woken up (to be specific, the terminal device is not paged, but another terminal device corresponding to the second signal is paged).

The following uses the example in FIG. 9 as an example to describe a possible manner of implementing timing by using a plurality of first signals.

In a possible implementation, timing is implemented in a state machine switching manner.

For example, FIG. 10 is a schematic diagram of a state machine control signal according to an embodiment of this application.

As shown in FIG. 10, the UE 1 receives the signal #11 through the wake-up circuit. If the UE 1 does not receive the signal #11 through the wake-up circuit in the first time period, the UE 1 wakes up a primary circuit, and may further disable the wake-up circuit. If the UE 1 receives the signal #11 through the wake-up circuit, the UE 1 may receive the signal #12 and the signal #21 through the wake-up circuit. If the UE 1 receives the signal #21 through the wake-up circuit, the UE 1 wakes up the primary circuit, and may further disable the wake-up circuit. If the UE 1 does not receive the signal #12 in the first time period, the UE 1 wakes up the primary circuit, and may further disable the wake-up circuit. If the UE 1 receives the signal #12 through the wake-up circuit, but does not receive the signal #21, the UE 1 may continue to receive the signal #11 through the wake-up circuit. Alternatively, if the UE 1 receives the signal #12 through the wake-up circuit, and it is considered that the network device may send the second signal (namely, the signal #22) of the UE 2 and does not send the second signal (namely, the signal #21) of the UE 1 in a time period corresponding to the signal #12, the UE 1 may no longer receive the signal #21 through the wake-up circuit in the time period #2, to reduce power consumption of the wake-up circuit. The time period #2 (an example of the third time period) indicates a time period after a moment at which the UE 1 receives the signal #12 (an example of the fourth signal) and before a moment at which the UE 1 receives the signal #11.

In another possible implementation, timing is implemented by using a timer.

For example, after receiving the signal #11, the UE 1 starts a timer (referred to as a timer #2 for differentiation), and the UE 1 receives the signal #21 through the wake-up circuit in a running phase (or a running period) of the timer #2. Duration of the timer #2 may be equal to a time length between the signal # 11 and the signal #12 (or may be greater than the time length between the signal #11 and the signal #12), for example, duration of the time period #1 or the time period #3.

For another example, after receiving the signal #12, the UE 1 starts a timer (referred to as a timer #3 for differentiation), and the UE 1 does not receive the signal #21 in a running phase of the timer #3, or the wake-up circuit of the UE 1 may be in a sleep state in the running phase of the timer #3. The signal #21 is received after the timer #3 ends (or times out), or the wake-up circuit of the UE 1 is woken up after the timer #3 ends. Duration of the timer #3 may be equal to a time length between the signal #11 and the signal #12 (or may be greater than the time length between the signal #11 and the signal #12), for example, duration of the time period #2 or the time period #4.

For another example, after receiving the signal #11, the UE 1 starts a timer #2, and the UE 1 receives the signal #21 through the wake-up circuit in a running phase of the timer #2. After receiving the signal #12, the UE 1 starts a timer #3, and the UE 1 does not receive the signal #21 in a running phase of the timer #3, or the wake-up circuit of the UE 1 may be in a sleep state in the running phase of the timer #3. The signal #21 is received after the timer #3 ends (or times out), or the wake-up circuit of the UE 1 is woken up after the timer #3 ends.

The foregoing two manners are merely examples for description, and this application is not limited thereto. For example, the UE 1 may calculate, based on periodicities of the signal #11 and the signal #12, time periods corresponding to the signal #11 and the signal #12, so as to receive the signal #21 in a time period corresponding to the signal #11.

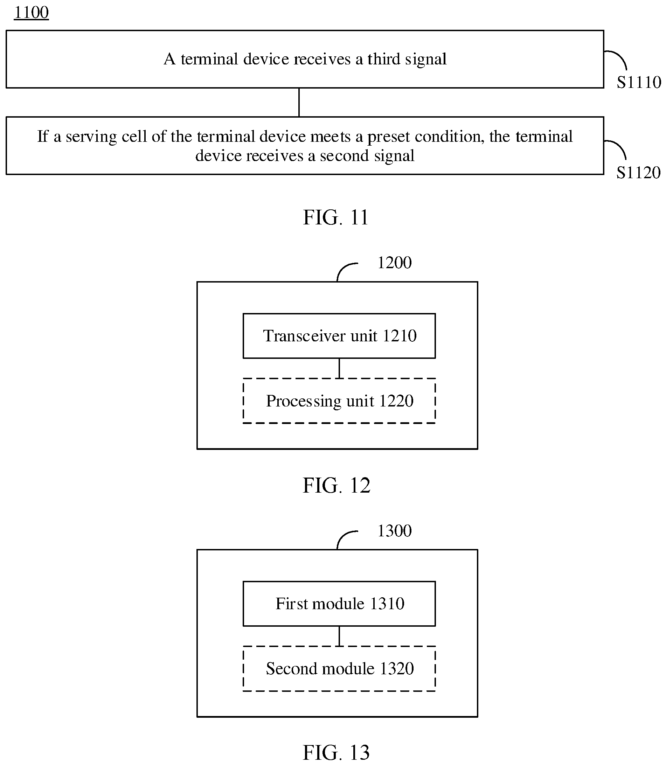

The foregoing mainly describes related solutions in which the terminal device wakes up the primary circuit. With reference to FIG. 11, the following describes a solution in which the terminal device enables (or wakes up) the wake-up circuit. It may be understood that, in the following solution shown in FIG. 11, a condition for triggering the primary circuit of the terminal device to be in a working state is not limited. For example, the following solution shown in FIG. 11 may be used in combination with the foregoing solution. In other words, the terminal device may enable the primary circuit to be in the working state by using the foregoing solution. Alternatively, the following solution shown in FIG. 11 may be used independently. In other words, the terminal device may enable the primary circuit to be in the working state in another manner. For terms used in the following, refer to the foregoing descriptions. Details are not described herein again.

FIG. 11 is a schematic diagram of a communication method 1100 according to still another embodiment of this application. The method 1100 may include the following steps.

S 1110: A terminal device receives a third signal.

For example, the terminal device receives the third signal through a primary circuit.

S 1120: If a serving cell of the terminal device meets a preset condition, the terminal device receives a second signal.

If the serving cell of the terminal device meets the preset condition, the terminal device may disable the primary circuit and enable a wake-up circuit. The terminal device may receive the second signal through the wake-up circuit.

The preset condition may include, for example, a distance between the terminal device and a network device is short, and/or a moving speed of the terminal device is low. Descriptions are separately provided below.

Condition 1: The distance between the terminal device and the network device is short.

The short distance between the terminal device and the network device indicates that the terminal device is located at a location at which a network of the network device is strong. When the distance between the terminal device and the network device is short, the terminal device may disable the primary circuit and enable the wake-up circuit.

Optionally, the terminal device may measure signal quality (or channel quality) of the serving cell, to determine the distance between the terminal device and the network device, or determine whether the terminal device is located at a location at which the network of the network device is strong.

Cell signal quality may be represented in a plurality of manners. This is not limited in this embodiment of this application. For example, the cell signal quality may be represented by any one or more of the following: reference signal received power (reference signal received power, RSRP), reference signal received quality (reference signal received quality, RSRQ), and a signal to interference plus noise ratio (signal to interference plus noise ratio, SINR). The RSRP is used as an example. If RSRP of the serving cell measured by the terminal device in a fourth time period is greater than or equal to a threshold (referred to as a threshold #2 for differentiation), it is considered that the distance between the terminal device and the network device is short, and the terminal device may disable the primary circuit and enable the wake-up circuit.

The cell signal quality may be obtained by measuring an SSB that is obtained by measuring a signal of the serving cell. The signal may be an SSB, or may be a secondary synchronization signal (secondary synchronization signal, SSS), or may be a first signal. This is not limited.

Duration (referred to as duration #2 for differentiation) of the fourth time period may be a predefined (for example, protocol-defined) time length, or may be configured by a network side for the terminal device, or may be preset inside the terminal device, or may be duration (for example, duration estimated based on a historical situation) determined by the terminal device. This is not limited. The threshold #2 (an example of a second threshold) may be predefined (for example, defined in a protocol), or may be configured by the network side for the terminal device, or may be preset inside the terminal device, or may be determined between terminal devices. This is not limited.

A start moment of the fourth time period may be, for example, a moment at which the primary circuit is woken up. Alternatively, a start moment of the fourth time period may be a moment after the primary circuit works for a period of time (for example, referred to as a moment after a fifth time period). This is not limited herein. A start moment of the fifth time period is the moment at which the primary circuit is woken up, and duration (referred to as duration #3 for differentiation) of the fifth time period is greater than 0, for example, may be a predefined (for example, protocol-defined) time length, or may be configured by the network side for the terminal device, or may be preset inside the terminal device, or may be duration (for example, duration estimated based on a historical situation) determined by the terminal device. This is not limited.

Optionally, the fourth time period and/or the fifth time period are/is implemented by using a timer. It is assumed that the fourth time period is implemented by using a timer #4, and the fifth time period is implemented by using a timer #5.

For example, after the primary circuit is woken up, the timer #4 is started by using the duration #2 as a time length. In a running phase of the timer #4, the terminal device measures signal quality of the serving cell through the primary circuit. When running of the timer #4 ends (or times out), the measurement ends. If RSRP of the serving cell measured by the terminal device in the running phase of the timer #4 is greater than the threshold #2, the terminal device may disable the primary circuit and enable (or wake up) the wake-up circuit.

For another example, after the primary circuit is woken up, after the running duration #3 of the primary circuit, the timer #4 is started by using the duration #2 as a time length. In a running phase of the timer #4, the terminal device measures signal quality of the serving cell through the primary circuit. When running of the timer #4 ends, the measurement ends. If RSRP of the serving cell measured by the terminal device in the running phase of the timer #4 is greater than the threshold #2, the terminal device may disable the primary circuit and enable the wake-up circuit.

For another example, after the primary circuit is woken up, the timer #5 is started by using the duration #3 as a time length. After running of the timer #5 ends, the timer #4 is started by using the duration #2 as a time length. In a running phase of the timer #4, the terminal device measures signal quality of the serving cell through the primary circuit. When running of the timer #4 ends, the measurement ends. If RSRP of the serving cell measured by the terminal device in the running phase of the timer #4 is greater than the threshold #2, the terminal device may disable the primary circuit and enable the wake-up circuit.

Condition 2: The moving speed of the terminal device is low.

When the moving speed of the terminal device is low, the terminal device may disable the primary circuit and enable the wake-up circuit.

Optionally, the terminal device may measure a signal quality variation of the serving cell, to determine the moving speed of the terminal device.

For example, if the signal quality variation of the serving cell measured by the terminal device in a fourth time period is less than a threshold (referred to as a threshold #3 for differentiation), the terminal device may disable the primary circuit and enable the wake-up circuit. It may be understood that the signal quality variation of the serving cell is less than the threshold #3, that is, a difference is within a specific threshold #3, indicates that a signal variation amplitude of the terminal device is small when the terminal device moves at any time, and indicates that the moving speed of the terminal device is low. Therefore, the terminal device may disable the primary circuit and enable the wake-up circuit.

The threshold #3 (an example of a third threshold) may be predefined (for example, defined in a protocol), or may be configured by the network side for the terminal device, or may be preset inside the terminal device, or may be determined between terminal devices. This is not limited.

The signal quality variation of the serving cell in the fourth time period may be obtained, for example, by measuring the signal quality of the serving cell twice or more times in the fourth time period.

A start moment of the fourth time period may be, for example, a moment at which the primary circuit is woken up. Alternatively, a start moment of the fourth time period may be a moment after a fifth time period. This is not limited herein. For the fourth time period and the second time period, refer to the descriptions in the condition 1. Details are not described herein again.

Optionally, the fourth time period and/or the fifth time period are/is implemented by using a timer.

For example, after the primary circuit is woken up, the timer #4 is started by using duration #2 as a time length. In a running phase of the timer #4, the terminal device measures the signal quality variation of the serving cell through the primary circuit. When running of the timer #4 ends, the measurement ends. If the signal quality variation of the serving cell measured by the terminal device in the running phase of the timer #4 is less than the threshold #3, the terminal device may disable the primary circuit and enable the wake-up circuit.

For another example, after the primary circuit is woken up, after running duration #3 of the primary circuit, the timer #4 is started by using duration #2 as a time length. In a running phase of the timer #4, the terminal device measures the signal quality variation of the serving cell through the primary circuit. When running of the timer #4 ends, the measurement ends. If the signal quality variation of the serving cell measured by the terminal device in the running phase of the timer #4 is less than the threshold #3, the terminal device may disable the primary circuit and enable the wake-up circuit.

For another example, after the primary circuit is woken up, the timer #5 is started by using duration #3 as a time length. After running of the timer #5 ends, the timer #4 is started by using duration #2 as a time length. In a running phase of the timer #4, the terminal device measures the signal quality variation of the serving cell through the primary circuit. When running of the timer #4 ends, the measurement ends. If the signal quality variation of the serving cell measured by the terminal device in the running phase of the timer #4 is less than the threshold #3, the terminal device may disable the primary circuit and enable the wake-up circuit.

It should be understood that the foregoing is merely examples for description, and any variation of the foregoing condition is applicable to embodiments of this application.

It may be understood that in embodiments of this application, "receiving" may alternatively be replaced with "detecting". For example, "receiving the first signal" may be replaced with "detecting the first signal", and "receiving the second signal" may be replaced with "detecting the second signal".

It may be understood that in embodiments of this application, the "second signal" may alternatively be replaced with a "wake-up signal" or a "paging-related signal received by the terminal device through a wake-up circuit".

It may be further understood that in embodiments of this application, the "signal" may alternatively be replaced with a "sequence" or a "signal sequence". For example, the "first signal" may be replaced with a "sequence" or a "sequence of the first signal". A person skilled in the art should understand a meaning of a relationship between a signal and a sequence. For example, after obtaining the sequence of the first signal, the network device may map the sequence of the first signal that is of a specific length to a transmission resource (for example, a time-frequency resource) to generate the first signal, and send the first signal to the terminal device.

It may be further understood that in some embodiments, the wake-up circuit and the primary circuit are mainly used as examples for description. This application is not limited thereto. For example, the "wake-up circuit" may be replaced with the "first module", and the "primary circuit" may be replaced with the "second module".

It may be further understood that in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that the examples in FIG. 5 to FIG. 10 in embodiments of this application are merely intended to help a person skilled in the art understand embodiments of this application, but are not intended to limit embodiments of this application to specific scenarios in the examples. A person skilled in the art can definitely make various equivalent modifications or changes based on the examples shown in FIG. 5 to FIG. 10, and such modifications or changes also fall within the scope of embodiments of this application.

It may be further understood that some optional features in embodiments of this application may not depend on another feature in some scenarios, or may be combined with another feature in some scenarios. This is not limited.

It may be further understood that the solutions in embodiments of this application may be appropriately combined for use, and explanations or descriptions of terms in embodiments may be mutually referenced or explained in the embodiments. This is not limited.

It may be further understood that in the method embodiments, the method and the operations implemented by the terminal device may be implemented by a component (for example, a chip or a circuit) of the terminal device. In addition, the method and the operations implemented by the network device may be implemented by a component (for example, a chip or a circuit) of the network device. This is not limited.

Corresponding to the methods provided in the method embodiments, an embodiment of this application further provides a corresponding apparatus. The apparatus includes a corresponding module configured to perform the method embodiments. The module may be software, hardware, or a combination of software and hardware. It may be understood that the technical features described in the method embodiments are also applicable to the following apparatus embodiments.

FIG. 12 is a schematic block diagram of a communication apparatus according to an embodiment of this application. The apparatus 1200 includes a transceiver unit 1210, and the transceiver unit 1210 may be configured to implement a corresponding communication function. The transceiver unit 1210 may also be referred to as a communication interface or a communication unit.

Optionally, the apparatus 1200 may further include a processing unit 1220, and the processing unit 1220 may be configured to perform data or signal processing.

Optionally, the apparatus 1200 further includes a storage unit. The storage unit may be configured to store instructions and/or data. The processing unit 1220 may read the instructions and/or the data in the storage unit, so that the apparatus implements actions of the terminal device in the method embodiments.

The apparatus 1200 may be configured to perform an action performed by the terminal device in the method embodiments. In this case, the apparatus 1200 may be the terminal device or a component of the terminal device. The transceiver unit 1210 is configured to perform receiving and sending-related operations on the terminal device side in the method embodiments. The processing unit 1220 is configured to perform processing-related operations on the terminal device side in the method embodiments.

In a design, the apparatus 1200 is configured to perform an action performed by the terminal device in the method embodiments.

In a possible implementation, the transceiver unit 1210 is configured to receive a first signal from a network device; the transceiver unit 1210 is configured to receive a second signal based on the first signal, where the second signal indicates paging-related first information; and if the apparatus 1200 does not receive the first signal in a first time period, the transceiver unit 1210 is configured to receive a third signal, where the third signal indicates paging-related second information.

Optionally, if the apparatus 1200 receives the second signal in the first time period, the transceiver unit 1210 is configured to receive the third signal, or the processing unit 1220 is configured to perform random access.

Optionally, if the apparatus 1200 receives the first signal but does not receive the second signal in the first time period, the transceiver unit 1210 is configured to receive the second signal.

Optionally, a waveform of the first signal is the same as a waveform of the second signal, and/or a modulation scheme of the first signal is the same as a modulation scheme of the second signal.

Optionally, the modulation scheme of the first signal and/or the modulation scheme of the second signal are/is on-off keying OOK; and/or the waveform of the first signal and/or the waveform of the second signal are/is the OOK.

Optionally, the first signal is a signal transmitted at a first frequency location, and the second signal is a signal transmitted at a second frequency location. The first frequency location is the same as the second frequency location, or the first frequency location is different from the second frequency location.

Optionally, the first signal is a tracking area specific signal; or the first signal is a signal specific to one or more cells; or the first signal is a signal specific to one or more network devices; or the first signal is a signal specific to one or more terminal devices; or the first signal is a signal specific to one or more time periods.

Optionally, the one or more time periods include a second time period, the second time period is within the first time period, and the transceiver unit 1210 is configured to receive the second signal in the second time period.

Optionally, the one or more terminal devices include the apparatus 1200. The transceiver unit 1210 is configured to receive a fourth signal from the network device, where the fourth signal indicates a terminal device other than the one or more terminal devices to receive the second signal or the third signal, and the second time period is a time period between a moment at which the apparatus 1200 receives the first signal and a moment at which the apparatus 1200 receives the fourth signal.

Optionally, the one or more terminal devices include the apparatus 1200. If the apparatus 1200 receives the first signal in the first time period, the transceiver unit 1210 is configured to receive a fourth signal, where the fourth signal indicates a terminal device other than the one or more terminal devices to receive the second signal or the third signal; or if the apparatus 1200 receives a fourth signal in the first time period, the transceiver unit 1210 is configured to receive the first signal, and/or the apparatus 1200 no longer receives the second signal in a third time period; or if the apparatus 1200 does not receive a fourth signal in the first time period, the transceiver unit 1210 is configured to receive the third signal, where the third time period is a time period after a moment at which the apparatus 1200 receives the fourth signal and before a moment at which the apparatus 1200 receives the first signal.

Optionally, if the apparatus 1200 does not receive the first signal in the first time period, the processing unit 1220 is configured to perform radio resource management RRM measurement or perform cell reselection.

Optionally, if signal quality of a serving cell of the apparatus 1200 in a fourth time period is greater than or equal to a second threshold, or if a signal quality variation of the serving cell in the fourth time period is less than or equal to a third threshold, the transceiver unit 1210 is configured to receive the second signal.

Optionally, the paging-related first information includes information about one or more terminal devices that need to receive paging, and/or information about one or more terminal devices that do not need to receive paging.

Optionally, the third signal is any one of the following: a paging early indication PEI, a paging physical downlink control channel paging PDCCH, or a paging message paging message.

The apparatus 1200 may implement steps or procedures performed by the terminal device in the method embodiments according to embodiments of this application. The apparatus 1200 may include units configured to perform the method performed by the terminal device in the embodiment shown in FIG. 3 or FIG. 4, or the apparatus 1200 may include units configured to perform the method performed by the terminal device in the embodiment shown in FIG. 11.

It should be understood that a specific process in which the units perform the corresponding steps is described in detail in the method embodiments. For brevity, details are not described herein.

It should be further understood that the apparatus 1200 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the terminal device in the foregoing embodiments, and may be configured to perform procedures and/or steps corresponding to the terminal device in the foregoing method embodiments. To avoid repetition, details are not described herein again.

The apparatus 1200 in each of the foregoing solutions has a function of implementing corresponding steps performed by the terminal device in the foregoing method. The function may be implemented by hardware, or may be implemented by hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1210 may alternatively be a transceiver circuit (for example, may include a receiver circuit and a transmitter circuit), and the processing unit may be a processing circuit.

It should be noted that the apparatus in FIG. 12 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is a schematic block diagram of another communication apparatus according to an embodiment of this application. The apparatus 1300 includes a first module 1310. The first module 1310 may be, for example, a wake-up circuit, or may be a module (for example, a receiving module) of a wake-up circuit. The first module 1310 may be configured to perform an operation performed by the first module (for example, the wake-up circuit) on the terminal device side in the foregoing method embodiments.

Optionally, the apparatus 1300 includes a second module 1320. The second module 1320 may be, for example, a primary circuit, or may be a module (for example, a receiving module) of a primary circuit. The first module 1310 and the second module 1320 may be integrated together, or may be disposed separately. The second module 1320 may be configured to perform an operation performed by the second module (for example, the primary circuit) on the terminal device side in the foregoing method embodiments.

In a design, the apparatus 1300 is configured to perform an action performed by the terminal device in the method embodiments.

In a possible implementation, the first module 1310 is configured to receive a first signal from a network device; the first module 1310 is configured to receive a second signal based on the first signal, where the second signal indicates paging-related first information; and if the apparatus 1300 does not receive the first signal through the first module 1310 or receives the second signal through the first module 1310 in a first time period, the first module 1310 is configured to wake up the second module.

Optionally, the second module 1320 is configured to receive a third signal, or the second module 1320 is configured to perform random access, where the third signal indicates paging-related second information.

Optionally, the third signal is any one of the following: a paging early indication PEI, a paging physical downlink control channel paging PDCCH, or a paging message paging message.

Optionally, if the apparatus 1300 receives the first signal through the first module 1310 and does not receive the second signal in the first time period, the first module 1310 is configured to receive the second signal.

Optionally, a waveform of the first signal is the same as a waveform of the second signal, and/or a modulation scheme of the first signal is the same as a modulation scheme of the second signal.

Optionally, the modulation scheme of the first signal and/or the modulation scheme of the second signal are/is on-off keying OOK; and/or the waveform of the first signal and/or the waveform of the second signal are/is the OOK.

Optionally, the first signal is a signal transmitted at a first frequency location, and the second signal is a signal transmitted at a second frequency location. The first frequency location is the same as the second frequency location, or the first frequency location is different from the second frequency location.

Optionally, the first signal is a tracking area specific signal; or the first signal is a signal specific to one or more cells; or the first signal is a signal specific to one or more network devices; or the first signal is a signal specific to one or more terminal devices; or the first signal is a signal specific to one or more time periods.

Optionally, the one or more time periods include a second time period, the second time period is within the first time period, and the first module 1310 is configured to receive the second signal in the second time period.

Optionally, the one or more terminal devices include the apparatus 1300. The first module 1310 is configured to receive a fourth signal from the network device, where the fourth signal indicates a terminal device other than the one or more terminal devices to receive the second signal or the third signal, and the second time period is a time period between a moment at which the apparatus 1300 receives the first signal through the first module 1310 and a moment at which the apparatus 1300 receives the fourth signal through the first module 1310.

Optionally, the one or more terminal devices include the apparatus 1300. If the apparatus 1300 receives the first signal through the first module 1310 in the first time period, the first module 1310 is configured to receive a fourth signal, where the fourth signal indicates a terminal device other than the one or more terminal devices to receive the second signal or the third signal; or if the apparatus 1300 receives a fourth signal through the first module 1310 in the first time period, the first module 1310 is configured to receive the first signal, and/or the apparatus 1300 no longer receives the second signal through the first module 1310 in a third time period; or if the apparatus 1300 does not receive a fourth signal through the first module 1310 in the first time period, the second module 1320 is configured to receive the third signal, where the third time period is a time period after a moment at which the apparatus 1300 receives the fourth signal through the first module 1310 and before a moment at which the apparatus 1300 receives the first signal through the first module 1310.

Optionally, the second module 1320 is configured to perform radio resource management RRM measurement, or the second module 1320 is configured to perform cell reselection.

Optionally, if signal quality of a serving cell of the apparatus 1300 in a fourth time period is greater than or equal to a second threshold, or if a signal quality variation of the serving cell in the fourth time period is less than or equal to a third threshold, the first module 1310 is configured to receive the second signal.

Optionally, the paging-related first information includes information about one or more terminal devices that need to receive paging, and/or information about one or more terminal devices that do not need to receive paging.

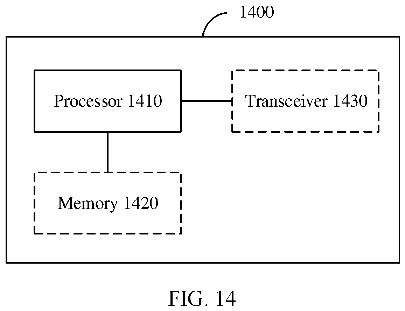

FIG. 14 is a schematic block diagram of still another communication apparatus according to an embodiment of this application. The apparatus 1400 includes a processor 1410. The processor 1410 is coupled to a memory 1420. The memory 1420 is configured to store a computer program or instructions and/or data. The processor 1410 is configured to execute the computer program or the instructions stored in the memory 1420, or read the data stored in the memory 1420, to perform the methods in the method embodiments.

Optionally, there are one or more processors 1410.

Optionally, there are one or more memories 1420.

Optionally, the memory 1420 and the processor 1410 are integrated together, or are separately disposed.

Optionally, as shown in FIG. 14, the apparatus 1400 further includes a transceiver 1430. The transceiver 1430 is configured to receive and/or send signals. For example, the processor 1410 is configured to control the transceiver 1430 to receive and/or send signals.

In a solution, the apparatus 1400 is configured to implement operations performed by the terminal device in the method embodiments.

For example, the processor 1410 is configured to execute the computer program or the instructions stored in the memory 1420, to implement related operations of the terminal device in the method embodiments, for example, the method performed by the terminal device in the embodiment shown in FIG. 3 or FIG. 4, or the method performed by the terminal device in the embodiment shown in FIG. 11.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. As an example instead of a limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (storage module) may be integrated into the processor.

It should further be noted that the memory described in this specification aims to include but is not limited to these memories and any memory of another suitable type.

An embodiment of this application further provides a computer-readable storage medium. The computer-readable storage medium stores computer instructions used to implement the method performed by the terminal device in the foregoing method embodiments.

For example, when the computer program is executed by a computer, the computer is enabled to implement the method performed by the terminal device in the method embodiments.

An embodiment of this application further provides a computer program product, including instructions. When the instructions are executed by a computer, the method performed by the terminal device in the method embodiments is implemented.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

Based on the foregoing descriptions, this application further provides the following embodiments.

Embodiment 1. A communication method, where the method includes:
a terminal device receives a first signal from a network device;
the terminal device receives a second signal based on the first signal, where the second signal indicates paging-related first information; and
if the terminal device does not receive the first signal in a first time period, the terminal device receives a third signal, where the third signal indicates paging-related second information.

Embodiment 2. The method according to Embodiment 1, where the method further includes:
if the terminal device receives the second signal in the first time period, the terminal device receives the third signal, or the terminal device performs random access.

Embodiment 3. The method according to Embodiment 1 or 2, where the method further includes:
if the terminal device receives the first signal but does not receive the second signal in the first time period, the terminal device receives the second signal.

Embodiment 4. The method according to any one of Embodiments 1 to 3, where
a waveform of the first signal is the same as a waveform of the second signal, and/or a modulation scheme of the first signal is the same as a modulation scheme of the second signal.

Embodiment 5. The method according to any one of Embodiments 1 to 4, where
the modulation scheme of the first signal and/or the modulation scheme of the second signal are/is on-off keying OOK; and/or
the waveform of the first signal and/or the waveform of the second signal are/is the OOK.

Embodiment 6. The method according to any one of Embodiments 1 to 5, where
the first signal is a signal transmitted at a first frequency location, and the second signal is a signal transmitted at a second frequency location; and
the first frequency location is the same as the second frequency location, or the first frequency location is different from the second frequency location.

Embodiment 7. The method according to any one of Embodiments 1 to 6, where
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

Embodiment 8. The method according to Embodiment 7, where the one or more time periods include a second time period, and the second time period is within the first time period; and
that the terminal device receives the second signal includes:
the terminal device receives the second signal in the second time period.

For example, the example in FIG. 9 is used. The second time period in Embodiment 8 may include, for example, the time period #1 and the time period #3.

Embodiment 9. The method according to Embodiment 8, where the one or more terminal devices includes the terminal device; and
after the terminal device receives the first signal from the network device, the method further includes:
the terminal device receives a fourth signal from the network device, where the fourth signal indicates a terminal device other than the one or more terminal devices to receive the second signal or the third signal, where
the second time period is a time period between a moment at which the terminal device receives the first signal and a moment at which the terminal device receives the fourth signal.

For example, the example in FIG. 9 is used. The terminal device other than the one or more terminal devices in Embodiment 9 may be, for example, the UE 2. The fourth signal in Embodiment 9 may be, for example, the signal #12. The first signal in Embodiment 9 may be, for example, the signal #11. Correspondingly, the second time period in Embodiment 9 may be, for example, the time period #3.

Embodiment 10. The method according to Embodiment 7, where the one or more terminal devices include the terminal device, and the method further includes:
if the terminal device receives the first signal in the first time period, the terminal device receives a fourth signal, where the fourth signal indicates a terminal device other than the one or more terminal devices to receive the second signal or the third signal; or
if the terminal device receives a fourth signal in the first time period, the terminal device receives the first signal, and/or the terminal device no longer receives the second signal in a third time period; or if the terminal device does not receive a fourth signal in the first time period, the terminal device receives the third signal, where
the third time period is a time period after a moment at which the terminal device receives the fourth signal and before a moment at which the terminal device receives the first signal.

For example, the example in FIG. 9 is used. The terminal device other than the one or more terminal devices in Embodiment 10 may be, for example, the UE 2. The fourth signal in Embodiment 10 may be, for example, the signal #12. The first signal in Embodiment 10 may be, for example, the signal #11. Correspondingly, the second time period in Embodiment 10 may be the time period #2.

For example, "a terminal device other than the one or more terminal devices" in Embodiment 9 or 10 may be, for example, another terminal device or another terminal device group.

Embodiment 11. The method according to any one of Embodiments 1 to 10, where the method further includes:
if the terminal device does not receive the first signal in the first time period, the terminal device performs radio resource management RRM measurement, or the terminal device performs cell reselection.

Embodiment 12. The method according to any one of Embodiments 1 to 11, where the method further includes:
if signal quality of a serving cell of the terminal device in a fourth time period is greater than or equal to a second threshold, or if a signal quality variation of the serving cell in the fourth time period is less than or equal to a third threshold, the terminal device receives the second signal.

For example, the embodiment shown in FIG. 11 is used. The second threshold in Embodiment 12 may be, for example, the threshold #2. The third threshold in Embodiment 12 may be, for example, the threshold #3.

Embodiment 13. The method according to any one of Embodiments 1 to 12, where the paging-related first information includes:
information about one or more terminal devices that need to receive paging, and/or information about one or more terminal devices that do not need to receive paging.

Embodiment 14. The method according to any one of Embodiments 1 to 13, where the third signal is any one of the following: a paging early indication PEI, a paging physical downlink control channel paging PDCCH, or a paging message paging message.

Embodiment 15. A communication method, where the method is applied to a terminal device, the terminal device includes a first module and a second module, and the method includes:
the terminal device receives a first signal from a network device through the first module;
the terminal device receives a second signal based on the first signal through the first module, where the second signal indicates paging-related first information; and
the terminal device wakes up the second module if the terminal device does not receive the first signal through the first module or receives the second signal through the first module in a first time period.

Embodiment 16. The method according to Embodiment 15, where after the second module is woken up, the method further includes:
the terminal device receives a third signal through the second module, or the terminal device performs random access through the second module, where
the third signal indicates paging-related second information.

Embodiment 17. The method according to Embodiment 16, where the third signal is any one of the following: a paging early indication PEI, a paging physical downlink control channel paging PDCCH, or a paging message paging message.

Embodiment 18. The method according to any one of Embodiments 15 to 17, where the method further includes:
if the terminal device receives the first signal but does not receive the second signal through the first module in the first time period, the terminal device receives the second signal through the first module.

Embodiment 19. The method according to any one of Embodiments 15 to 18, where
a waveform of the first signal is the same as a waveform of the second signal, and/or a modulation scheme of the first signal is the same as a modulation scheme of the second signal.

Embodiment 20. The method according to any one of Embodiments 15 to 19, where
the modulation scheme of the first signal and/or the modulation scheme of the second signal are/is on-off keying OOK; and/or
the waveform of the first signal and/or the waveform of the second signal are/is the OOK.

Embodiment 21. The method according to any one of Embodiments 15 to 20, where
the first signal is a signal transmitted at a first frequency location, and the second signal is a signal transmitted at a second frequency location; and
the first frequency location is the same as the second frequency location, or the first frequency location is different from the second frequency location.

Embodiment 22. The method according to any one of Embodiments 15 to 21, where
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

Embodiment 23. The method according to Embodiment 22, where the one or more time periods include a second time period, and the second time period is within the first time period; and
that the terminal device receives the second signal through the first module includes:
the terminal device receives the second signal in the second time period through the first module.

For example, the example in FIG. 9 is used. The second time period in Embodiment 23 may include, for example, the time period #1 and the time period #3.

Embodiment 24. The method according to Embodiment 23, where the one or more terminal devices includes the terminal device; and
after the terminal device receives the first signal from the network device through the first module, the method further includes:
the terminal device receives a fourth signal from the network device through the first module, where the fourth signal indicates a terminal device other than the one or more terminal devices to receive the second signal or the third signal, where
the second time period is a time period between a moment at which the terminal device receives the first signal through the first module and a moment at which the terminal device receives the fourth signal through the first module.

For example, the example in FIG. 9 is used. The terminal device other than the one or more terminal devices in Embodiment 24 may be, for example, the UE 2. The fourth signal in Embodiment 24 may be, for example, the signal #12. The first signal in Embodiment 24 may be, for example, the signal #11. Correspondingly, the second time period in Embodiment 24 may be, for example, the time period #3.

Embodiment 25. The method according to Embodiment 22, where the one or more terminal devices include the terminal device, and the method further includes:
if the terminal device receives the first signal through the first module in the first time period, the terminal device receives a fourth signal through the first module, where the fourth signal indicates a terminal device other than the one or more terminal devices to receive the second signal or the third signal; or
if the terminal device receives a fourth signal through the first module in the first time period, the terminal device receives the first signal through the first module, and/or the terminal device no longer receives the second signal through the first module in a third time period; or if the terminal device does not receive a fourth signal through the first module in the first time period, the terminal device receives the third signal through the second module, where
the third time period is a time period after a moment at which the terminal device receives the fourth signal through the first module and before a moment at which the terminal device receives the first signal through the first module.

For example, the example in FIG. 9 is used. The terminal device other than the one or more terminal devices in Embodiment 25 may be, for example, the UE 2. The fourth signal in Embodiment 25 may be, for example, the signal #12. The first signal in Embodiment 25 may be, for example, the signal #11. Correspondingly, the second time period in Embodiment 25 may be the time period #2.

For example, "a terminal device other than the one or more terminal devices" in Embodiment 24 or 25 may be, for example, another terminal device or another terminal device group.

Embodiment 26. The method according to any one of Embodiments 15 to 25, where after the terminal device wakes up the second module if the terminal device does not receive the first signal through the first module, the method further includes:
the terminal device performs radio resource management RRM measurement through the second module, or the terminal device performs cell reselection through the second module.

Embodiment 27. The method according to any one of Embodiments 15 to 26, where after the second module is woken up, the method further includes:
if signal quality of a serving cell of the terminal device in a fourth time period is greater than or equal to a second threshold, or if a signal quality variation of the serving cell in the fourth time period is less than or equal to a third threshold, the terminal device receives the second signal through the second module.

For example, the embodiment shown in FIG. 11 is used. The second threshold in Embodiment 27 may be, for example, the threshold #2. The third threshold in Embodiment 12 may be, for example, the threshold #3.

Embodiment 28. The method according to any one of Embodiments 15 to 27, where the paging-related first information includes:
information about one or more terminal devices that need to receive paging, and/or information about one or more terminal devices that do not need to receive paging.

Embodiment 29. A communication method, where the method is applied to a terminal device, the terminal device includes a first module and a second module, and the method includes:
the terminal device receives a third signal through the second module, where the third signal indicates paging-related second information; and
if a serving cell of the terminal device meets a preset condition, the terminal device wakes up the first module.

Embodiment 30. The method according to Embodiment 29, where after the terminal device wakes up the first module, the method further includes:
the terminal device receives a second signal through the first module, where the second signal indicates paging-related first information.

Embodiment 31. The method according to Embodiment 29 or 30, where the paging-related first information includes:
information about one or more terminal devices that need to receive paging, and/or information about one or more terminal devices that do not need to receive paging.

Embodiment 32. The method according to any one of Embodiments 29 to 31, where the method further includes:
after a fifth time period, the terminal device determines, through the second module, whether the serving cell of the terminal device meets the preset condition.

Embodiment 33. The method according to any one of Embodiments 29 to 32, where the preset condition is:
signal quality of the serving cell of the terminal device in a fourth time period is greater than or equal to a second threshold, or a signal quality variation of the serving cell in the fourth time period is less than or equal to a third threshold.

For example, the embodiment shown in FIG. 11 is used. The second threshold in Embodiment 33 may be, for example, the threshold #2. The third threshold in Embodiment 33 may be, for example, the threshold #3.

Embodiment 34. The method according to any one of Embodiments 29 to 33, where that the terminal device receives a third signal through the second module includes:
if the terminal device receives the second signal through the first module, the terminal device receives the third signal through the second module.

Embodiment 35. The method according to any one of Embodiments 29 to 34, where
the third signal is any one of the following: a paging early indication PEI, a paging physical downlink control channel paging PDCCH, or a paging message paging message.

Embodiment 36. A communication method, where the method includes:
a terminal device receives a third signal, where the third signal indicates paging-related second information; and
if a serving cell of the terminal device meets a preset condition, the terminal device receives a second signal, where the second signal indicates paging-related first information.

Embodiment 37. The method according to Embodiment 36, where the method further includes:
after a fifth time period, the terminal device determines whether the serving cell of the terminal device meets the preset condition.

Embodiment 38. The method according to Embodiment 36 or 37, where the preset condition is:
signal quality of the serving cell of the terminal device in a fourth time period is greater than or equal to a second threshold, or a signal quality variation of the serving cell in the fourth time period is less than or equal to a third threshold.

For example, the embodiment shown in FIG. 11 is used. The second threshold in Embodiment 38 may be, for example, the threshold #2. The third threshold in Embodiment 38 may be, for example, the threshold #3.

Embodiment 39. The method according to any one of Embodiments 36 to 38, where that the terminal device receives a third signal includes:
if the terminal device receives the second signal, the terminal device receives the third signal.

Embodiment 40. The method according to any one of Embodiments 36 to 38, where the paging-related first information includes:
information about one or more terminal devices that need to receive paging, and/or information about one or more terminal devices that do not need to receive paging.

Embodiment 41. The method according to any one of Embodiments 36 to 40, where the third signal is any one of the following: a paging early indication PEI, a paging physical downlink control channel paging PDCCH, or a paging message paging message.

Embodiment 42. A communication apparatus, including a module or unit configured to perform the method according to any one of Embodiments 1 to 14, or including a module or unit configured to perform the method according to any one of Embodiments 15 to 28, or including a module or unit configured to perform the method according to any one of Embodiments 29 to 35, or including a module or unit configured to perform the method according to any one of Embodiments 36 to 41.

Embodiment 43. A communication apparatus, including a processor, where the processor is configured to execute a computer program or instructions stored in a memory, so that the apparatus performs the method according to any one of Embodiments 1 to 14, or the apparatus performs the method according to any one of Embodiments 15 to 28, or the apparatus performs the method according to any one of Embodiments 29 to 35, or the apparatus performs the method according to any one of Embodiments 36 to 41.

Embodiment 44. A computer-readable storage medium, where the computer-readable storage medium stores a computer program or instructions, and when the computer program or the instructions are run on a computer, the computer is enabled to perform the method according to any one of Embodiments 1 to 14, or the computer is enabled to perform the method according to any one of Embodiments 15 to 28, or the computer is enabled to perform the method according to any one of Embodiments 29 to 35, or the computer is enabled to perform the method according to any one of Embodiments 36 to 41.

Embodiment 45. A computer program product, where the computer program product includes a computer program or instructions used to perform the method according to any one of Embodiments 1 to 14, or the computer program product includes a computer program or instructions used to perform the method according to any one of Embodiments 15 to 28, or the computer program product includes a computer program or instructions used to perform the method according to any one of Embodiments 29 to 35, or the computer program product includes a computer program or instructions used to perform the method according to any one of Embodiments 36 to 41.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A communication method, wherein the method comprises:
receiving, by a terminal device, a first signal from a network device;
receiving, by the terminal device, a second signal based on the first signal, wherein the second signal indicates paging-related first information; and
if the terminal device does not receive the first signal in a first time period, receiving, by the terminal device, a third signal, wherein the third signal indicates paging-related second information.

2. The method according to claim 1, wherein the method further comprises:
if the terminal device receives the second signal in the first time period, receiving, by the terminal device, the third signal, or performing, by the terminal device, random access.

3. The method according to claim 1 or 2, wherein the method further comprises:
if the terminal device receives the first signal but does not receive the second signal in the first time period, receiving, by the terminal device, the second signal.

4. The method according to any one of claims 1 to 3, wherein
a waveform of the first signal is the same as a waveform of the second signal, and/or a modulation scheme of the first signal is the same as a modulation scheme of the second signal.

5. The method according to any one of claims 1 to 4, wherein
the modulation scheme of the first signal and/or the modulation scheme of the second signal are/is on-off keying OOK; and/or
the waveform of the first signal and/or the waveform of the second signal are/is the OOK.

6. The method according to any one of claims 1 to 5, wherein
the first signal is a signal transmitted at a first frequency location, and the second signal is a signal transmitted at a second frequency location; and
the first frequency location is the same as the second frequency location, or the first frequency location is different from the second frequency location.

7. The method according to any one of claims 1 to 6, wherein
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

8. The method according to claim 7, wherein the one or more time periods comprise a second time period, and the second time period is within the first time period; and
the receiving, by the terminal device, the second signal comprises:
receiving, by the terminal device, the second signal in the second time period.

9. The method according to claim 8, wherein the one or more terminal devices comprise the terminal device; and
after the receiving, by a terminal device, a first signal from a network device, the method further comprises:
receiving, by the terminal device, a fourth signal from the network device, wherein the fourth signal indicates a terminal device other than the one or more terminal devices to receive the second signal or the third signal, wherein
the second time period is a time period between a moment at which the terminal device receives the first signal and a moment at which the terminal device receives the fourth signal.

10. The method according to claim 7, wherein the one or more terminal devices comprise the terminal device, and the method further comprises:
if the terminal device receives the first signal in the first time period, receiving, by the terminal device, a fourth signal, wherein the fourth signal indicates a terminal device other than the one or more terminal devices to receive the second signal or the third signal; or
if the terminal device receives a fourth signal in the first time period, receiving, by the terminal device, the first signal, and/or no longer receiving, by the terminal device, the second signal in a third time period; or if the terminal device does not receive a fourth signal in the first time period, receiving, by the terminal device, the third signal, wherein
the third time period is a time period after a moment at which the terminal device receives the fourth signal and before a moment at which the terminal device receives the first signal.

11. The method according to any one of claims 1 to 10, wherein the method further comprises:
if the terminal device does not receive the first signal in the first time period, performing, by the terminal device, radio resource management RRM measurement, or performing, by the terminal device, cell reselection.

12. The method according to any one of claims 1 to 11, wherein the method further comprises:
if signal quality of a serving cell of the terminal device in a fourth time period is greater than or equal to a second threshold, or if a signal quality variation of the serving cell in the fourth time period is less than or equal to a third threshold, receiving, by the terminal device, the second signal.

13. The method according to any one of claims 1 to 12, wherein the paging-related first information comprises:
information about one or more terminal devices that need to receive paging, and/or information about one or more terminal devices that do not need to receive paging.

14. The method according to any one of claims 1 to 13, wherein the third signal is any one of the following: a paging early indication PEI, a paging physical downlink control channel paging PDCCH, or a paging message paging message.

15. A communication method, wherein the method is applied to a terminal device, the terminal device comprises a first module and a second module, and the method comprises:
receiving, by the terminal device, a first signal from a network device through the first module;
receiving, by the terminal device, a second signal based on the first signal through the first module, wherein the second signal indicates paging-related first information; and
waking up, by the terminal device, the second module if the terminal device does not receive the first signal through the first module or receives the second signal through the first module in a first time period.

16. The method according to claim 15, wherein after the waking up the second module, the method further comprises:
receiving, by the terminal device, a third signal through the second module, or performing, by the terminal device, random access through the second module, wherein
the third signal indicates paging-related second information.

17. The method according to claim 16, wherein the third signal is any one of the following: a paging early indication PEI, a paging physical downlink control channel paging PDCCH, or a paging message paging message.

18. The method according to any one of claims 15 to 17, wherein the method further comprises:
if the terminal device receives the first signal but does not receive the second signal through the first module in the first time period, receiving, by the terminal device, the second signal through the first module.

19. The method according to any one of claims 15 to 18, wherein
a waveform of the first signal is the same as a waveform of the second signal, and/or a modulation scheme of the first signal is the same as a modulation scheme of the second signal.

20. The method according to any one of claims 15 to 19, wherein
the modulation scheme of the first signal and/or the modulation scheme of the second signal are/is on-off keying OOK; and/or
the waveform of the first signal and/or the waveform of the second signal are/is the OOK.

21. The method according to any one of claims 15 to 20, wherein
the first signal is a signal transmitted at a first frequency location, and the second signal is a signal transmitted at a second frequency location; and
the first frequency location is the same as the second frequency location, or the first frequency location is different from the second frequency location.

22. The method according to any one of claims 15 to 21, wherein
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

23. The method according to claim 22, wherein the one or more time periods comprise a second time period, and the second time period is within the first time period; and
the receiving, by the terminal device, the second signal through the first module comprises:
receiving, by the terminal device, the second signal in the second time period through the first module.

24. The method according to claim 23, wherein the one or more terminal devices comprise the terminal device; and
after the receiving, by the terminal device, a first signal from a network device through the first module, the method further comprises:
receiving, by the terminal device, a fourth signal from the network device through the first module, wherein the fourth signal indicates a terminal device other than the one or more terminal devices to receive the second signal or the third signal, wherein
the second time period is a time period between a moment at which the terminal device receives the first signal through the first module and a moment at which the terminal device receives the fourth signal through the first module.

25. The method according to claim 22, wherein the one or more terminal devices comprise the terminal device, and the method further comprises:
if the terminal device receives the first signal through the first module in the first time period, receiving, by the terminal device, a fourth signal through the first module, wherein the fourth signal indicates a terminal device other than the one or more terminal devices to receive the second signal or the third signal; or
if the terminal device receives a fourth signal through the first module in the first time period, receiving, by the terminal device, the first signal through the first module, and/or no longer receiving, by the terminal device, the second signal through the first module in a third time period; or if the terminal device does not receive a fourth signal through the first module in the first time period, receiving, by the terminal device, the third signal through the second module, wherein
the third time period is a time period after a moment at which the terminal device receives the fourth signal through the first module and before a moment at which the terminal device receives the first signal through the first module.

26. The method according to any one of claims 15 to 25, wherein after the waking up, by the terminal device, the second module if the terminal device does not receive the first signal through the first module, the method further comprises:
performing, by the terminal device, radio resource management RRM measurement through the second module, or performing, by the terminal device, cell reselection through the second module.

27. The method according to any one of claims 15 to 26, wherein after the waking up the second module, the method further comprises:
if signal quality of a serving cell of the terminal device in a fourth time period is greater than or equal to a second threshold, or if a signal quality variation of the serving cell in the fourth time period is less than or equal to a third threshold, receiving, by the terminal device, the second signal through the second module.

28. The method according to any one of claims 15 to 27, wherein the paging-related first information comprises:
information about one or more terminal devices that need to receive paging, and/or information about one or more terminal devices that do not need to receive paging.

29. A communication apparatus, wherein the apparatus comprises a transceiver unit;
the transceiver unit is configured to receive a first signal from a network device;
the transceiver unit is further configured to receive a second signal based on the first signal, wherein the second signal indicates paging-related first information; and
the transceiver unit is further configured to: if the apparatus does not receive the first signal in a first time period, receive a third signal, wherein the third signal indicates paging-related second information.

30. The apparatus according to claim 29, wherein
the transceiver unit is further configured to: if the apparatus receives the second signal in the first time period, receive the third signal; or
the apparatus further comprises a processing unit, and the processing unit is configured to: if the apparatus receives the second signal, perform random access.

31. The apparatus according to claim 29 or 30, wherein the transceiver unit is further configured to:
if the apparatus receives the first signal but does not receive the second signal in the first time period, receive the second signal.

32. The apparatus according to any one of claims 29 to 31, wherein
a waveform of the first signal is the same as a waveform of the second signal, and/or a modulation scheme of the first signal is the same as a modulation scheme of the second signal.

33. The apparatus according to any one of claims 29 to 32, wherein
the modulation scheme of the first signal and/or the modulation scheme of the second signal are/is on-off keying OOK; and/or
the waveform of the first signal and/or the waveform of the second signal are/is the OOK.

34. The apparatus according to any one of claims 29 to 33, wherein
the first signal is a signal transmitted at a first frequency location, and the second signal is a signal transmitted at a second frequency location; and
the first frequency location is the same as the second frequency location, or the first frequency location is different from the second frequency location.

35. The apparatus according to any one of claims 29 to 34, wherein
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

36. The apparatus according to claim 35, wherein the one or more time periods comprise a second time period, and the second time period is within the first time period; and
the transceiver unit is specifically configured to receive the second signal in the second time period.

37. The apparatus according to claim 36, wherein the one or more terminal devices comprise the apparatus; and
the transceiver unit is further configured to receive a fourth signal from the network device, wherein the fourth signal indicates a terminal device other than the one or more terminal devices to receive the second signal or the third signal, wherein
the second time period is a time period between a moment at which the apparatus receives the first signal and a moment at which the apparatus receives the fourth signal.

38. The apparatus according to claim 35, wherein the one or more terminal devices comprise the apparatus, and the transceiver unit is further configured to:
if the apparatus receives the first signal in the first time period, receive a fourth signal, wherein the fourth signal indicates a terminal device other than the one or more terminal devices to receive the second signal or the third signal; or
if the apparatus receives a fourth signal in the first time period, receive the first signal, and/or no longer receive the second signal in a third time period; or if the apparatus does not receive a fourth signal in the first time period, receive the third signal, wherein
the third time period is a time period after a moment at which the apparatus receives the fourth signal and before a moment at which the apparatus receives the first signal.

39. The apparatus according to any one of claims 29 to 38, wherein the apparatus further comprises the processing unit, and the processing unit is configured to:
if the apparatus does not receive the first signal in the first time period, perform radio resource management RRM measurement, or perform cell reselection.

40. The apparatus according to any one of claims 29 to 39, wherein the transceiver unit is further configured to:
if signal quality of a serving cell of the apparatus in a fourth time period is greater than or equal to a second threshold, or if a signal quality variation of the serving cell in the fourth time period is less than or equal to a third threshold, receive the second signal.

41. The apparatus according to any one of claims 29 to 40, wherein the paging-related first information comprises:
information about one or more terminal devices that need to receive paging, and/or information about one or more terminal devices that do not need to receive paging.

42. The apparatus according to any one of claims 29 to 41, wherein the third signal is any one of the following: a paging early indication PEI, a paging physical downlink control channel paging PDCCH, or a paging message paging message.

43. A communication apparatus, wherein the apparatus is used in a terminal device, and the terminal device comprises a first module and a second module;
the first module is configured to receive a first signal from a network device;
the first module is further configured to receive a second signal based on the first signal, wherein the second signal indicates paging-related first information; and
the first module is further configured to wake up the second module if the terminal device does not receive the first signal through the first module or receives the second signal through the first module in a first time period.

44. The apparatus according to claim 43, wherein after the second module is woken up,
the second module is configured to: receive a third signal, or perform random access, wherein
the third signal indicates paging-related second information.

45. The apparatus according to claim 44, wherein the third signal is any one of the following: a paging early indication PEI, a paging physical downlink control channel paging PDCCH, or a paging message paging message.

46. The apparatus according to any one of claims 43 to 45, wherein
if the terminal device receives the first signal but does not receive the second signal through the first module in the first time period, the first module is further configured to receive the second signal.

47. The apparatus according to any one of claims 43 to 46, wherein
a waveform of the first signal is the same as a waveform of the second signal, and/or a modulation scheme of the first signal is the same as a modulation scheme of the second signal.

48. The apparatus according to any one of claims 43 to 47, wherein
the modulation scheme of the first signal and/or the modulation scheme of the second signal are/is on-off keying OOK; and/or
the waveform of the first signal and/or the waveform of the second signal are/is the OOK.

49. The apparatus according to any one of claims 43 to 48, wherein
the first signal is a signal transmitted at a first frequency location, and the second signal is a signal transmitted at a second frequency location; and
the first frequency location is the same as the second frequency location, or the first frequency location is different from the second frequency location.

50. The apparatus according to any one of claims 43 to 49, wherein
the first signal is a tracking area specific signal; or
the first signal is a signal specific to one or more cells; or
the first signal is a signal specific to one or more network devices; or
the first signal is a signal specific to one or more terminal devices; or
the first signal is a signal specific to one or more time periods.

51. The apparatus according to claim 50, wherein the one or more time periods comprise a second time period, and the second time period is within the first time period; and
the first module is specifically configured to receive the second signal in the second time period.

52. The apparatus according to claim 51, wherein the one or more terminal devices comprise the terminal device; and
the first module is further configured to receive a fourth signal from the network device, wherein the fourth signal indicates a terminal device other than the one or more terminal devices to receive the second signal or the third signal, wherein
the second time period is a time period between a moment at which the terminal device receives the first signal through the first module and a moment at which the terminal device receives the fourth signal through the first module.

53. The apparatus according to claim 50, wherein the one or more terminal devices comprise the terminal device; and
if the terminal device receives the first signal through the first module in the first time period, the first module is further configured to receive a fourth signal, wherein the fourth signal indicates a terminal device other than the one or more terminal devices to receive the second signal or the third signal; or
if the terminal device receives a fourth signal through the first module in the first time period, the first module is further configured to: receive the first signal, and/or no longer receive the second signal in a third time period; or if the terminal device does not receive a fourth signal through the first module in the first time period, the second module is further configured to receive the third signal, wherein
the third time period is a time period after a moment at which the terminal device receives the fourth signal through the first module and before a moment at which the terminal device receives the first signal through the first module.

54. The apparatus according to any one of claims 43 to 53, wherein
the second module is further configured to: perform radio resource management RRM measurement, or perform cell reselection.

55. The apparatus according to any one of claims 43 to 54, wherein if signal quality of a serving cell of the terminal device in a fourth time period is greater than or equal to a second threshold, or if a signal quality variation of the serving cell in the fourth time period is less than or equal to a third threshold, the first module is further configured to receive the second signal.

56. The apparatus according to any one of claims 43 to 55, wherein the paging-related first information comprises:
information about one or more terminal devices that need to receive paging, and/or information about one or more terminal devices that do not need to receive paging.

57. A communication apparatus, comprising a processor, wherein the processor is configured to execute a computer program or instructions stored in a memory, so that the apparatus performs the method according to any one of claims 1 to 14, or the apparatus performs the method according to any one of claims 15 to 28.

58. The apparatus according to claim 57, wherein the apparatus further comprises the memory.

59. The apparatus according to claim 57 or 58, wherein the apparatus further comprises a communication interface, and the communication interface is coupled to the processor; and
the communication interface is configured to input and/or output information.

60. The apparatus according to any one of claims 57 to 59, wherein the apparatus is a chip.

61. A computer-readable storage medium, wherein the computer-readable storage medium stores a computer program or instructions, and when the computer program or the instructions are run on a computer, the computer is enabled to perform the method according to any one of claims 1 to 14, or the computer is enabled to perform the method according to any one of claims 15 to 28.

62. A computer program product, wherein the computer program product comprises a computer program or instructions used to perform the method according to any one of claims 1 to 14, or the computer program product comprises a computer program or instructions used to perform the method according to any one of claims 15 to 28.
